# EUROPEAN PATENT SPECIFICATION

(11) **EP 3 395 920 B1**
(45) Date of publication and mention of the grant of the patent: **23.08.2023**
(21) Application number: 16879338.8
(22) Date of filing: 21.12.2016
(51) Int. Cl.: C09J 1/02, C09J 11/04, C09D 1/04, C09D 1/02, C23C 26/02, B05D 7/00, C22C 38/02, C21D 1/30, C08K 3/20, C09D 7/40

(54) **ADHESSIVE COATING COMPOSITION FOR ELECTRICAL STEEL SHEET, ELECTRICAL STEEL SHEET WITH ADHESIVE COATING LAYER, ELECTRICAL STEEL SHEET PRODUCT, AND METHOD FOR MANUFACTURING PRODUCT**
HAFTBESCHICHTUNGSZUSAMMENSETZUNG FÜR ELEKTROSTAHLBLECH, ELEKTROSTAHLBLECH MIT HAFTBESCHICHTUNGSSCHICHT, ELEKTROSTAHLBLECHPRODUKT UND VERFAHREN ZUR HERSTELLUNG DES PRODUKTS
COMPOSITION DE REVÊTEMENT ADHÉSIF POUR FEUILLE D'ACIER ÉLECTRIQUE, FEUILLE D'ACIER ÉLECTRIQUE RECOUVERTE D'UNE COUCHE DE REVÊTEMENT ADHÉSIF, PRODUIT POUR FEUILLE D'ACIER ÉLECTRIQUE, ET PROCÉDÉ DE FABRICATION ASSOCIÉ

(30) Priority: 24.12.2015 KR 20150186243
(43) Date of publication of application: 31.10.2018
(73) Proprietor: POSCO Co., Ltd, Pohang-si, Gyeongsangbuk-do 37859 (KR)
(72) Inventor: KIM, Jung Woo, Pohang-si Gyeongsangbuk-do 37859 (KR); CHOI, Heon Jo, Pohang-si Gyeongsangbuk-do 37859 (KR); BONG, Won-Seog, Pohang-si Gyeongsangbuk-do 790-300 (KR); NO, Tae Young, Pohang-si Gyeongsangbuk-do 37859 (KR); PARK, Jong-Tae, Pohang-si Gyeongsangbuk-do 37859 (KR)
(74) Representative: Meissner Bolte Partnerschaft mbB
(86) International application number: PCT/KR2016/015033
(87) International publication number: WO 2017/111471

(56) References cited:
- EP-A1- 0 041 212
- EP-A1- 2 223 975
- JP-A- H0 797 244
- JP-A- H09 323 066
- JP-A- 2008 019 373
- JP-A- 2012 046 825
- KR-A- 20150 074 817
- US-A- 4 824 807

## Description

### [Technical Field]

An electrical steel sheet adhesive coating composition, an electrical steel sheet having an adhesive coating layer, an electrical steel sheet product, and a method for manufacturing the product are disclosed.

### [Background Art]

In manufacturing an electrical steel sheet product, forming of an insulation passivation film is part of a finishing process for manufacturing a product. In this process, the film improves electrical properties while inhibiting occurrence of an eddy current. In addition, when iron cores are manufactured by laminating many materials after punching work of the electrical steel sheets into a predetermined shape, there are needs for anti-sticking properties and surface close-contacting properties such that steel sheets of iron cores are not adhered to each other after a stress-relief annealing process.

In addition to said basic characteristics, excellent application workability of a coating solution, solution stability such that it is usable for a long period after the combination, and the like are also required.

In this regard, research on adhering electrical steel sheets through fusion of an adhesive solution coated on the surface of the electrical steel sheets without using a conventional method of welding, clamping, interlocking, and the like has been being made. For example, an organic adhesive coating composition including an organic adhesive coating material has been developed for this purpose. However, the organic adhesive coating composition has a deterioration problem in terms of an adhesion force of each steel sheet as well as surface characteristics (insulation, close adherence, anti-corrosive properties, and the like), since the organic material is completely decomposed at a high temperature during stress-relief annealing.

EP 0 041 212 A1 relates to a water glass based adhesive solutions containing: from about 25 to 50 percent by weight of dispersed crystalline calcium carbonate; from about 2 to 10 percent by weight of quartz powder with a particle size of up to about 15 µm and a specific surface area of at least about 3.5 qm/g; and from 0 to about 24 percent by weight of a 50 percent by weight stable, aqueous dispersion of an alkali-resistant organic polymer based upon acrylate, styrene/acrylate, styrene/butadiene, or a mixture thereof based on the weight of the total composition.

JP H09 323 066 A discloses an insulating coating film-applied silicon steel sheet capable of being produced by low-temp. baking, capable of stress relief annealing, revealing excellent resistance to corrosion and solvent even without using a chromate and fulfilling other coating film performance. The insulating coating film-applied silicon steel sheet is capable of stress relief annealing and excellent in resistance to corrosion and solvent, because the surface is coated with an insulating film contg. an ethylene- unsaturated carboxylic acid copolymer (a), an epoxy resin (b), a silane coupling agent (c) and silica (d) in (a)/(b)/(c)/(d)=5-95/5-95/0.1-50/20-500 (where (a)+(b)=100 pts.wt.) at 0.05-4g/m<2> on a dry weight basis.

EP 2 223 975 A1 discloses a chromium-free treating liquid and treatment methods, which are for imparting to a zinc or zinc alloy deposit a coating film which is highly corrosion-resistant. The chromium-free treating liquid has a uniform appearance free from sag stains/puddle stains, has no failure concerning thickness unevenness, and has satisfactory adhesion. The surface-treating aqueous solution, which is for forming a corrosion-resistant coating film over a zinc or zinc alloy deposit, is characterized by comprising (a) an alkali metal silicate (M 2 O ¢nSiO 2 (wherein M represents an alkali metal and n indicates SiO 2 /M 2 O molar ratio)), (b) a water-soluble or water-dispersible silane coupling agent, and (c) a water-soluble or water-dispersible glycidyl ether compound. One of the surface treatment methods for forming a highly corrosion-resistant coating film over a zinc or zinc alloy deposit includes bringing the surface of the zinc or zinc alloy deposit into contact with the surface-treating aqueous solution. The surface-treating aqueous solution is applicable also to the surface of a chemical conversion coating film formed on a zinc or zinc alloy deposit and free from hexavalent chromium or from chromium in any form. Namely, another surface treatment method for forming a highly corrosion-resistant coating film over a zinc or zinc alloy deposit comprises bringing the surface of a chemical conversion coating film formed on a zinc or zinc alloy deposit into contact with the surface-treating aqueous solution. Furthermore provided is a highly corrosion-resistant coating film formed by bringing the solution into contact with the surface of a zinc or zinc alloy deposit or with the surface of a chemical conversion coating film formed on a zinc or zinc alloy deposit.

US 4 824 807 A relates to an alkali metal silicate glass, which is mixed with water to form an aqueous alkali metal silicate glass suspension, then dried to form a flexible solid alkali metal silicate glass product, which may be heated to above the boiling temperature of water to produce a cellular product. The flexible solid product may be utilized as a flexible film, as an adhesive, a coating agent and a binding agent. The foamed product may be used for thermal and sound insulation.

### (DISCLOSURE)

### [Technical Problem]

Embodiments of the present invention have been made in an effort to provide an electrical steel sheet adhesive coating composition capable of solving the above-described problems, an electrical steel sheet with an adhesive coating layer, an electrical steel sheet product, and a method for manufacturing the product.

### [Technical Solution]

An embodiment of the present invention provides an electrical steel sheet adhesive coating composition including a first component including water glass and an additive, and a solvent, wherein the water glass is one or a mixture of two or more of sodium silicate represented by Chemical Formula 2, potassium silicate represented by Chemical Formula 3, and lithium silicate represented by Chemical Formula 4, wherein the water glass includes a material represented by Chemical Formula 1 below, the additive is one among an oxide and a hydroxide of a material selected from copper, aluminum, calcium, magnesium, chromium, iron, zinc, zirconium, phosphorus, titanium, strontium, boron, antimony, tin, sodium, potassium, lithium, and nickel, or a mixture of two thereof, 80 to 99.9 wt% of the water glass and 0.1 to 20 wt% of the additive are included based on the total amount, 100 wt%, of the first component, 5 to 200 parts by weight of the solvent is included based on the total amount, 100 parts by weight, of the first component, and a specific gravity of the electrical steel sheet adhesive coating composition is 1.01 to 1.5 g/l, wherein the adhesive coating composition further includes 1 to 10 parts by weight of a second component based on the total amount, 100 parts by weight, of the first component, wherein the second component is a water-soluble resin, and the water-soluble resin is one or a mixture of two or more of epoxy-based, acryl-based, phenol-based, acryl-modified epoxy-based, siloxane polymer-based, styrene-based, polyol-based, vinyl-based, ethylene-based, and urethane-based resins:

[Chemical Formula 1] M_{X}O·n₁SiO₂·m₁H₂O

wherein in Chemical Formula 1, M is a metal element selected from Na, K, and Li, x is an integer satisfying 0.1 ≤ x ≤ 5, n₁ is an integer satisfying 0.1 ≤ n₁ ≤ 15, and m₁ is an integer satisfying 1 ≤ m₁ ≤ 50,

[Chemical Formula 2] Na₂O·n₂SiO₂·m₂H₂O

[Chemical Formula 3] K₂O·n₃SiO₂·m₃H₂O

[Chemical Formula 4] Li₂O·n₄SiO₂·m₄H₂O

wherein, in Chemical Formula 2, n₂ is an integer satisfying 0.1 ≤ n₂ ≤ 5 and m₂ is an integer satisfying 1 ≤ m₂ ≤ 50,
in Chemical Formula 3, n₃ is an integer satisfying 0.1 ≤ n₃ ≤ 15 and m₃ is an integer satisfying 1 ≤ m₃ ≤ 50, and
in Chemical Formula 4, n₄ is an integer satisfying 0.1 ≤ n₄ ≤ 50 and m₄ is an integer satisfying 1 ≤ m₄ ≤ 50,
wherein a weight ratio of silicate (SiO₂) relative to sodium oxide (Na₂O) in the sodium silicate is 1.5 to 4.0,
wherein a weight ratio of silicate (SiO₂) relative to potassium oxide (K₂O) in the potassium silicate is 1.5 to 3.0,
wherein a weight ratio of silicate (SiO₂) relative to lithium oxide (Li₂O) in the lithium silicate is 5.0 to 15.0.

Another embodiment of the present invention provides an electrical steel sheet with an adhesive coating layer including: an electrical steel sheet; and an adhesive coating layer disposed on one surface or both surfaces of the electrical steel sheet, wherein the adhesive coating layer includes a first component including water glass and an additive, the water glass includes a material represented by Chemical Formula 1 below, wherein the water glass is one or a mixture of two or more of sodium silicate represented by Chemical Formula 2, potassium silicate represented by Chemical Formula 3, and lithium silicate represented by Chemical Formula 4, the additive is one among an oxide and a hydroxide of a material selected from copper, aluminum, calcium, magnesium, chromium, iron, zinc, zirconium, phosphorus, titanium, strontium, boron, antimony, tin, sodium, potassium, lithium, and nickel, or a mixture of two thereof, 80 to 99.9 wt% of the water glass and 0.1 to 20 wt% of the additive are included based on the total amount, 100 wt%, of the first component, and 0.1 to 20 wt% of the additive is included, wherein the adhesive coating composition further includes 1 to 10 parts by weight of a second component based on the total amount, 100 parts by weight, of the first component, wherein the second component is a water-soluble resin, and the water-soluble resin is one or a mixture of two or more of epoxy-based, acryl-based, phenol-based, acryl-modified epoxy-based, siloxane polymer-based, styrene-based, polyol-based, vinyl-based, ethylene-based, and urethane-based resins:

[Chemical Formula 1] M_{X}O·n₁SiO₂·m₁H₂O

wherein in Chemical Formula 1, M is a metal element selected from Na, K, and Li, x is an integer satisfying 0.1 ≤ x ≤ 5, n₁ is an integer satisfying 0.1 ≤ n₁ ≤ 15, and m₁ is an integer satisfying 1 ≤ m₁ ≤ 50,

[Chemical Formula 2] Na₂O·n₂SiO₂·m₂H₂O

[Chemical Formula 3] K₂O·n₃SiO₂·m₃H₂O

[Chemical Formula 4] Li₂O·n₄SiO₂·m₄H₂O

wherein, in Chemical Formula 2, n₂ is an integer satisfying 0.1 ≤ n₂ ≤ 5 and m₂ is an integer satisfying 1 ≤ m₂ ≤ 50,
in Chemical Formula 3, n₃ is an integer satisfying 0.1 ≤ n₃ ≤ 15 and m₃ is an integer satisfying 1 ≤ m₃ ≤ 50, and
in Chemical Formula 4, n₄ is an integer satisfying 0.1 ≤ n₄ ≤ 50 and m₄ is an integer satisfying 1 ≤ m₄ ≤ 50,
wherein a weight ratio of silicate (SiO₂) relative to sodium oxide (Na₂O) in the sodium silicate is 1.5 to 4.0,
wherein a weight ratio of silicate (SiO₂) relative to potassium oxide (K₂O) in the potassium silicate is 1.5 to 3.0,
wherein a weight ratio of silicate (SiO₂) relative to lithium oxide (Li₂O) in the lithium silicate is 5.0 to 15.0.

Another embodiment of the present invention provides an electrical steel sheet product including: a plurality of electrical steel sheets; and an adhesive coating layer disposed between the plurality of electrical steel sheets, wherein the adhesive coating layer includes a first component including water glass and an additive, the water glass includes a material represented by Chemical Formula 1 below, wherein the water glass is one or a mixture of two or more of sodium silicate represented by Chemical Formula 2, potassium silicate represented by Chemical Formula 3, and lithium silicate represented by Chemical Formula 4, the additive is one among an oxide and a hydroxide of a material selected from copper, aluminum, calcium, magnesium, chromium, iron, zinc, zirconium, phosphorus, titanium, strontium, boron, antimony, tin, sodium, potassium, lithium, and nickel, or a mixture of two thereof,, 80 to 99.9 wt% of the water glass and 0.1 to 20 wt% of the additive are included based on the total amount, 100 wt%, of the first component, and 0.1 to 20 wt% of the additive is included, wherein the adhesive coating composition further includes 1 to 10 parts by weight of a second component based on the total amount, 100 parts by weight, of the first component, wherein the second component is a water-soluble resin, and the water-soluble resin is one or a mixture of two or more of epoxy-based, acryl-based, phenol-based, acryl-modified epoxy-based, siloxane polymer-based, styrene-based, polyol-based, vinyl-based, ethylene-based, and urethane-based resins:

[Chemical Formula 1] M_{X}O·n₁SiO₂·m₁H₂O

wherein in Chemical Formula 1, M is a metal element selected from Na, K, and Li, x is an integer satisfying 0.1 ≤ x ≤ 5, n₁ is an integer satisfying 0.1 ≤ n₁ ≤ 15, and m₁ is an integer satisfying 1 ≤ m₁ ≤ 50,

[Chemical Formula 2] Na₂O·n₂SiO₂·m₂H₂O

[Chemical Formula 3] K₂O·n₃SiO₂·m₃H₂O

[Chemical Formula 4] Li₂O·n₄SiO₂·m₄H₂O

wherein, in Chemical Formula 2, n₂ is an integer satisfying 0.1 ≤ n₂ ≤ 5 and m₂ is an integer satisfying 1 ≤ m₂ ≤ 50,
in Chemical Formula 3, n₃ is an integer satisfying 0.1 ≤ n₃ ≤ 15 and m₃ is an integer satisfying 1 ≤ m₃ ≤ 50, and
in Chemical Formula 4, n₄ is an integer satisfying 0.1 ≤ n₄ ≤ 50 and m₄ is an integer satisfying 1 ≤ m₄ ≤ 50,
wherein a weight ratio of silicate (SiO₂) relative to sodium oxide (Na₂O) in the sodium silicate is 1.5 to 4.0,
wherein a weight ratio of silicate (SiO₂) relative to potassium oxide (K₂O) in the potassium silicate is 1.5 to 3.0,
wherein a weight ratio of silicate (SiO₂) relative to lithium oxide (Li₂O) in the lithium silicate is 5.0 to 15.0.

Another embodiment of the present invention provides a method of manufacturing an electrical steel sheet product, including: preparing an adhesive coating composition; coating a plurality of electrical steel sheets with the adhesive coating composition; laminating the plurality of electrical steel sheets coated with the adhesive coating composition; and performing stress-relief annealing (SRA) of the laminated plurality of electrical steel sheets to obtain an electrical steel sheet product, wherein the adhesive coating composition includes a first component including water glass and an additive, and a solvent, the water glass includes a material represented by Chemical Formula 1 below, wherein the water glass is one or a mixture of two or more of sodium silicate represented by Chemical Formula 2, potassium silicate represented by Chemical Formula 3, and lithium silicate represented by Chemical Formula 4, the additive is one among an oxide and a hydroxide of a material selected from copper, aluminum, calcium, magnesium, chromium, iron, zinc, zirconium, phosphorus, titanium, strontium, boron, antimony, tin, sodium, potassium, lithium, and nickel, or a mixture of two thereof, 80 to 99.9 wt% of the water glass and 0.1 to 20 wt% of the additive are included based on the total amount, 100 wt%, of the first component, 5 to 200 parts by weight of the solvent is included based on the total amount, 100 parts by weight, of the first component, and a specific gravity of the adhesive coating composition is 1.01 to 1.5 g/l, wherein the adhesive coating composition further includes 1 to 10 parts by weight of a second component based on the total amount, 100 parts by weight, of the first component, wherein the second component is a water-soluble resin, and the water-soluble resin is one or a mixture of two or more of epoxy-based, acryl-based, phenol-based, acryl-modified epoxy-based, siloxane polymer-based, styrene-based, polyol-based, vinyl-based, ethylene-based, and urethane-based resins:

[Chemical Formula 1] M_{X}O·n₁SiO₂·m₁H₂O

wherein in Chemical Formula 1, M is a metal element selected from Na, K, and Li, x is an integer satisfying 0.1 ≤ x ≤ 5, n₁ is an integer satisfying 0.1 ≤ n₁ ≤ 15, and m₁ is an integer satisfying 1 ≤ m₁ ≤ 50

[Chemical Formula 2] Na₂O·n₂SiO₂·m₂H₂O

[Chemical Formula 3] K₂O·n₃SiO₂·m₃H₂O

[Chemical Formula 4] Li₂O·n₄SiO₂·m₄H₂O

wherein, in Chemical Formula 2, n₂ is an integer satisfying 0.1 ≤ n₂ ≤ 5 and m₂ is an integer satisfying 1 ≤ m₂ ≤ 50,
in Chemical Formula 3, n₃ is an integer satisfying 0.1 ≤ n₃ ≤ 15 and m₃ is an integer satisfying 1 ≤ m₃ ≤ 50, and
in Chemical Formula 4, n₄ is an integer satisfying 0.1 ≤ n₄ ≤ 50 and m₄ is an integer satisfying 1 ≤ m₄ ≤ 50,
wherein a weight ratio of silicate (SiO₂) relative to sodium oxide (Na₂O) in the sodium silicate is 1.5 to 4.0,
wherein a weight ratio of silicate (SiO₂) relative to potassium oxide (K₂O) in the potassium silicate is 1.5 to 3.0,
wherein a weight ratio of silicate (SiO₂) relative to lithium oxide (Li₂O) in the lithium silicate is 5.0 to 15.0.

### [Advantageous Effects]

In embodiments of the present invention, an electrical steel sheet adhesive coating composition having excellent workability during manufacture of an electrical steel sheet product and excellent surface characteristics and adherence after forming a coating layer, an electrical steel sheet having an adhesive coating layer, an electrical steel sheet product, and a method for manufacturing the product, are provided.

### [Description of the Drawings]

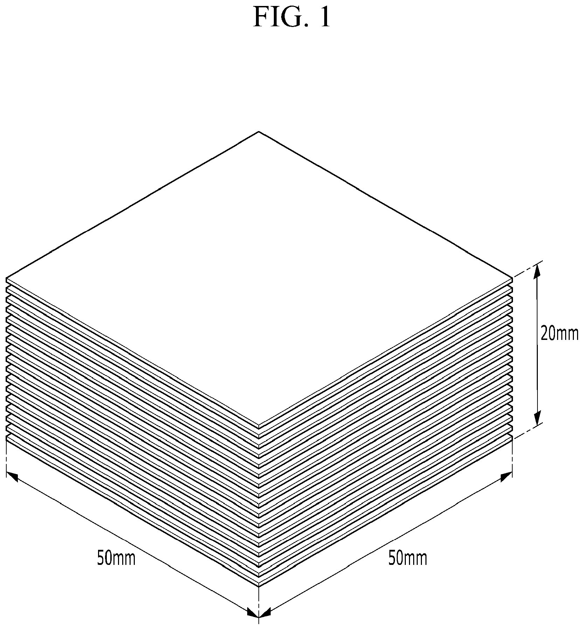

FIG. 1 is a schematic view showing an electrical steel sheet product according to an embodiment of the present invention.
FIG. 2 is an optical microscope photograph (left) and a scanning electron microscope photograph (right) showing a cross-section of an electrical steel sheet product according to Example 1.

### [Mode for Invention]

Hereinafter, embodiments of the present invention are described in detail. However, these embodiments are exemplary, the present invention is not limited thereto, and the present invention is defined by the scope of claims.

### Electrical Steel Sheet Adhesive Coating Composition

An embodiment of the present invention provides an electrical steel sheet adhesive coating composition including a first component including water glass and an additive, and a solvent, wherein the water glass includes a material represented by Chemical Formula 1 below, the additive is one among an oxide and a hydroxide of a material selected from copper, aluminum, calcium, magnesium, chromium, iron, zinc, zirconium, phosphorus, titanium, strontium, boron, antimony, tin, sodium, potassium, lithium, and nickel, or a mixture of two thereof, 80 to 99.9 wt% of the water glass and 0.1 to 20 wt% of the additive are included based on the total amount, 100 wt%, of the first component, and based on the total amount, 100 parts by weight, of the first component, 5 to 200 parts by weight of the solvent is included.

[Chemical Formula 1] M_{X}O·n₁SiO₂·m₁H₂O

In Chemical Formula 1, M is a metal element selected from Na, K, and Li, x is an integer satisfying 0.1 ≤ x ≤ 5, n₁ is an integer satisfying 0.1 ≤ n₁ ≤ 15, and m₁ is an integer satisfying 1 ≤ m₁ ≤ 50.

The adhesive coating composition may be adhered through heat-fusion after being coated on the surface of an electrical steel sheet without using a conventional method of welding, clamping, interlocking, and the like.

Research on adhering an adhesive coating composition on the surface of an electrical steel sheet after being coated thereon through heat-fusion without using a conventional method of welding, clamping, interlocking, and the like is underway. The adhesive coating composition developed for this purpose is an organic adhesive coating composition mainly including an organic material. However, the organic material included in the organic adhesive coating composition may be completely decomposed at a high temperature during stress-relief annealing. Accordingly, adhesion force of the organic adhesive coating composition to an electrical steel sheet as well as surface characteristics (insulation, close adherence, anti-corrosive properties, and the like) may be deteriorated.

On the other hand, an adhesive coating composition according to the present invention is an inorganic adhesive coating composition and has excellent adherence (bonding strength) on the surface after stress-relief annealing. The stress-relief annealing may not only improve magnetic properties (a core loss and magnetic flux density) and efficiency of an electrical steel sheet product, but may also suppress noise and vibration.

The electrical steel sheet adhesive coating composition has a specific gravity of 1.01 to 1.5 g/l. Specifically, as 5 to 200 parts by weight of the solvent based on the total amount is used, the electrical steel sheet adhesive coating composition is controlled to have specific gravity in a range of 1.01 to 1.5 g/l.

Specifically, when an amount of the solvent is increased within the range, specific gravity of the electrical steel sheet adhesive coating composition may be gradually decreased, and thus stability, spreadability, and workability thereof may be excellent. In addition, a coating layer formed of the adhesive coating composition having specific gravity within the range on a steel sheet may have an elegant surface without a defect (a stripe, a spot, and the like).

In this regard, in post-described embodiments of the present invention, an electrical steel sheet adhesive coating composition controlled to have specific gravity in a range of 1.01 to 1.5 g/l is prepared by using 5 to 200 parts by weight of a solvent based on 100 parts by weight of a first component, and the above effect of the electrical steel sheet adhesive coating composition is confirmed.

The adhesive coating composition includes 1 to 10 parts by weight of a second component based on the total amount, 100 parts by weight, of the first component. Specifically, the second component is a water-soluble resin and the water-soluble resin is one, or a mixture of two or more, of epoxy-based, acryl-based, phenol-based, acryl-modified epoxy-based, siloxane polymer-based, styrene-based, polyol-based, vinyl-based, ethylene-based, and urethane-based resins.

Specifically, the first component, the second component, the additive, the solvent, and amounts thereof are as follows.

The water glass may function as an adhesive agent forming an adhesion force in the electrical steel sheet adhesive coating composition.

Specifically, the water glass is one or a mixture of two or more of sodium silicate represented by Chemical Formula 2, potassium silicate represented by Chemical Formula 3, and lithium silicate represented by Chemical Formula 4.

[Chemical Formula 2] Na₂O·n₂SiO₂·m₂H₂O

[Chemical Formula 3] K₂O·n₃SiO₂·m₃H₂O

[Chemical Formula 4] Li₂O·n₄SiO₂·m₄H₂O

In Chemical Formula 2, n₂ is an integer satisfying 0.1 ≤ n₂ ≤ 5 and m₂ is an integer satisfying 1 ≤ m₂ ≤ 50, in Chemical Formula 3, n₃ is an integer satisfying 0.1 ≤ n₃ ≤ 15 and m₃ is an integer satisfying 1 ≤ m₃ ≤ 50, and in Chemical Formula 4, n₄ is an integer satisfying 0.1 ≤ n₄ ≤ 50 and m₄ is an integer satisfying 1 ≤ m₄ ≤ 50.

The water glass may be mixed with two or more of alkali metal silicate compounds, and in the water glass, a weight ratio of an alkali metal oxide and silicate may be appropriately adjusted.

When the water glass includes sodium silicate represented by Chemical Formula 2, a weight ratio of silicate (SiO₂) relative to sodium oxide (Na₂O) in the sodium silicate is 1.5 to 4.0.

When the water glass includes potassium silicate represented by Chemical Formula 3, a weight ratio of silicate (SiO₂) relative to potassium oxide (K₂O) in the potassium silicate is 1.5 to 3.0.

When the water glass includes lithium silicate represented by Chemical Formula 4, a weight ratio of silicate (SiO₂) relative to lithium oxide (Li₂O) in the lithium silicate is 5.0 to 15.0.

In addition, when at least two kinds of water glass are mixed, an alkali metal (Na₂O, K₂O, Li₂O), and silicate (SiO₂) in each metal silicate may be included in the above ratio.

When the weight ratio of metal oxide and silicate is adjusted as above, water glass forms a flow point at a stress-relief annealing temperature, and thus a coating layer of each steel sheet may be fused and then easily formed into one layer with each steel sheet. Accordingly, each steel sheet may be easily solidified after the stress-relief annealing.

80 to 99.9 wt% of the water glass are included based on the total amount, 100 wt%, of the first component. When the water glass is included in a small amount, the flow point is out of the stress-relief annealing temperature range, and thus an adhesion force may not be sufficiently applied.

The additive may play a role of suppressing adsorption resistance on the surface of a coating layer and improving anti-corrosive properties and heat resistance of the coating layer.

Specifically the additive is one among an oxide and a hydroxide of a material selected from copper, aluminum, calcium, magnesium, chromium, iron, zinc, zirconium, phosphorus, titanium, strontium, boron, antimony, tin, sodium, potassium, lithium, and nickel, or a mixture of two thereof.

0.1 to 20 wt% of the additive are included based on the total amount, 100 wt%, of the first component.

When the oxide and hydroxide are included in too small an amount, solution leveling and workability due to generation of surface stickiness after drying may be deteriorated. When the oxide and hydroxide are included in too large an amount, an amount of the water glass becomes relatively smaller, and thus an adhesion force may be deteriorated after the stress-relief annealing.

The adhesive coating composition includes a water-soluble resin that is a second component.

The water-soluble resin plays a role of improving workability such as slitting property, punching property, and the like in the electrical steel sheet adhesive coating composition. In addition, the water-soluble resin plays a role of improving properties such as leveling of a coating composition and the like, suppressing adsorption resistance on the surface of a coating layer, and improving anti-corrosive properties.

Specifically, the water-soluble resin may have a glass transition temperature (T_{g}) of 30 to 200 °C.

Specifically, the water-soluble resin is one, or a mixture of two or more, of epoxy-based, acryl-based, phenol-based, acryl-modified epoxy-based, siloxane polymer-based, styrene-based, polyol-based, vinyl-based, ethylene-based, and urethane-based resins.

The water-soluble resin may have a number average molecular weight (Mₙ) of 1000 to 10,000 and a weight average molecular weight (M_{g}) of 1000 to 50,000.

When the number average molecular weight is too low, anti-corrosive properties and close-contacting properties may be deteriorated. When the number average molecular weight is too high, there may be a problem of solution miscibility and workability.

When the weight average molecular weight is too low, adherence may be deteriorated. When the weight average molecular weight is too high, workability may be deteriorated.

When the water-soluble resin is further included in the adhesive coating composition, the water-soluble resin is included in an amount of 1 to 10 parts by weight based on the total amount, 100 parts by weight, of the first component. When the water-soluble resin is excessively included, adherence may be deteriorated.

The adhesive coating composition further includes a solvent.

Specifically, the solvent may be water, acetic acid, ethanol, or methanol. However, it is not limited thereto.

The solvent is included in an amount of 5 to 200 parts by weight based on the total amount, 100 parts by weight, of the first component. When the solvent is included within the range, specific gravity of an adhesive coating composition is controlled in a range of 1.01 to 1.5 g/l. Accordingly, an electrical steel sheet adhesive coating composition may have excellent stability, spreadability, and workability by adjusting specific gravity of the electrical steel sheet adhesive coating composition. In addition, a coating layer formed of an adhesive coating composition having specific gravity within the range may have an elegant surface without a defect (a stripe, a spot, and the like).

### Electrical Steel Sheet with Adhesive Coating Layer

Another embodiment of the present invention provides an electrical steel sheet with an adhesive coating layer including: an electrical steel sheet; and an adhesive coating layer disposed on one surface or both surface of the electrical steel sheet, wherein the adhesive coating layer includes a first component including water glass and an additive, the water glass includes a material represented by Chemical Formula 1 below, the additive is one among an oxide and a hydroxide of a material selected from copper, aluminum, calcium, magnesium, chromium, iron, zinc, zirconium, phosphorus, titanium, strontium, boron, antimony, tin, sodium, potassium, lithium, and nickel, or a mixture of two thereof, 80 to 99.9 wt% of the water glass and 0.1 to 20 wt% of the additive are included based on the total amount, 100 wt%, of the first component, and 0.1 to 20 wt% of the additive is included.

[Chemical Formula 1] M_{X}O·n₁SiO₂·m₁H₂O

In Chemical Formula 1, M is a metal element selected from Na, K, and Li, x is an integer satisfying 0.1 ≤ x ≤ 5, n₁ is an integer satisfying 0.1 ≤ n₁ ≤ 15, and m₁ is an integer satisfying 1 ≤ m₁ ≤ 50.

The electrical steel sheet may be an oriented electrical steel sheet or a non-oriented electrical steel sheet.

A thickness of the electrical steel sheet may be 0.1 to 1.0 mm.

The adhesive coating layer may have a thickness of 0.1 to 20 µm. When the adhesive coating layer is too thin, insulation properties and adhesion force may be insufficient. When the adhesive coating layer is too thick, a stacking factor is deteriorated, and thus electrical characteristics of an electrical steel sheet product may be deteriorated. A thickness of the adhesive coating layer may be controlled by adjusting specific gravity and a coating amount of the adhesive composition, a temperature and time for drying, and the like.

The adhesive coating layer further includes a water-soluble resin that is a second component, and details for the water-soluble resin are the same as described above and thus are omitted.

The first component, the second component, the additive, and amounts thereof are the same as described above and thus their descriptions are omitted.

### Electrical Steel Sheet Product

Another embodiment of the present invention provides an electrical steel sheet product including: a plurality of electrical steel sheets; and an adhesive coating layer disposed between the plurality of electrical steel sheets; wherein the adhesive coating layer includes a first component including water glass and an additive, the water glass includes a material represented by Chemical Formula 1 below, the additive is one among an oxide and a hydroxide of a material selected from copper, aluminum, calcium, magnesium, chromium, iron, zinc, zirconium, phosphorus, titanium, strontium, boron, antimony, tin, sodium, potassium, lithium, and nickel, or a mixture of two thereof, 80 to 99.9 wt% of the water glass and 0.1 to 20 wt% of the additive are included based on the total amount, 100 wt%, of the first component, and 0.1 to 20 wt% of the additive is included.

[Chemical Formula 1] M_{X}O·n₁SiO₂·m₁H₂O

In Chemical Formula 1, M is a metal element selected from Na, K, and Li, x is an integer satisfying 0.1 ≤ x ≤ 5, n₁ is an integer satisfying 0.1 ≤ n₁ ≤ 15, and m₁ is an integer satisfying 1 ≤ m₁ ≤ 50.

Specifically, when the solvent is used in an amount of 5 to 200 parts by weight based on the total amount, 100 parts by weight, of the first component, specific gravity of the electrical steel sheet adhesive coating composition is controlled in a range of 1.01 to 1.5 g/l.

Kinds and thicknesses of the electrical steel sheet and thicknesses of the adhesive coating layer are the same as described above and thus are omitted. The adhesive coating layer further includes a water-soluble resin that is a second component, and details for the water-soluble resin are the same as described above and thus are omitted. The first component, the second component, the additive, and amounts thereof are the same as described above and thus their descriptions are omitted.

The electrical steel sheet product is manufactured through heat-fusion after coating the above adhesive coating composition on the surface of an electrical steel sheet without using a conventional method of welding, clamping, interlocking, and the like.

The adhesive coating composition is an inorganic adhesive coating composition, and shows excellent adherence (bonding strength) on the surface after stress-relief annealing. The adhesive coating composition may not only improve magnetic properties (a core loss and magnetic flux density) and efficiency of an electrical steel sheet product through stress-relief annealing, but may also suppress noise and vibration.

### Method of Manufacturing Electrical Steel Sheet Product

Another embodiment of the present invention provides a method of manufacturing an electrical steel sheet product that includes: preparing an adhesive coating composition; coating a plurality of electrical steel sheets with the adhesive coating composition; laminating the plurality of electrical steel sheets coated with the adhesive coating composition; and performing stress-relief annealing (SRA) of the laminated plurality of electrical steel sheets to obtain an electrical steel sheet product, wherein the adhesive coating composition includes a first component including water glass and an additive, and a solvent, the water glass includes a material represented by Chemical Formula 1 below, the additive is one among an oxide and a hydroxide of a material selected from copper, aluminum, calcium, magnesium, chromium, iron, zinc, zirconium, phosphorus, titanium, strontium, boron, antimony, tin, sodium, potassium, lithium, and nickel, or a mixture of two thereof, 80 to 99.9 wt% of the water glass and 0.1 to 20 wt% of the additive are included based on the total amount, 100 wt%, of the first component, and based on the total amount, 100 parts by weight, of the first component, 5 to 200 parts by weight of the solvent is included.

[Chemical Formula 1] M_{X}O·n₁SiO₂·m₁H₂O

In Chemical Formula 1, M is a metal element selected from Na, K, and Li, x is an integer satisfying 0.1 ≤ x ≤ 5, n₁ is an integer satisfying 0.1 ≤ n₁ ≤ 15, and m₁ is an integer satisfying 1 ≤ m₁ ≤ 50.

The method is to heat-fuse different electrical steel sheets by simply using the above adhesive coating composition without using a conventional method of welding, clamping, interlocking, and the like.

Kinds and thicknesses of the electrical steel sheet and thicknesses of the adhesive coating layer are the same as described above, and thus are omitted. The adhesive coating layer further includes a water-soluble resin that is a second component, and details for the water-soluble resin are the same as described above and thus are omitted. The first component, the second component, the additive, and amounts thereof are the same as described above and thus their descriptions are omitted.

The electrical steel sheet adhesive coating composition has a specific gravity of 1.01 to 1.5 g/l.

Specifically, when an amount of the solvent is increased within the range, specific gravity of the electrical steel sheet adhesive coating composition is gradually decreased, and accordingly, the electrical steel sheet adhesive coating composition may have excellent stability, spreadability, and workability.

In addition, a coating layer formed of the adhesive coating composition having specific gravity within the range may have an elegant surface without a defect (a stripe, a spot, and the like).

In this regard, in an exemplary embodiment of the present invention, an electrical steel sheet adhesive coating composition controlled to have specific gravity in a range of 1.01 to 1.5 g/l is prepared by using 5 to 200 parts by weight of a solvent based on 100 parts by weight of a first component.

The coating of the plurality of electrical steel sheets with the adhesive coating composition may include coating the adhesive coating composition on one surface or both surfaces of the plurality of electrical steel sheets, and curing the coated adhesive coating composition to form an adhesive coating layer.

The curing of the coated adhesive coating composition to form an adhesive coating layer may be performed in a temperature range of 200 to 700 °C for 5 to 60 seconds.

The performing of stress-relief annealing (SRA) of the laminated plurality of electrical steel sheets to obtain an electrical steel sheet product may be performed in a pressure range of 0.05 to 5.0 MPa, at a temperature of 500 to 900 °C, for 30 to 180 minutes.

The following examples illustrate the present invention in more detail. However, the following examples are merely preferred exemplary embodiments of the present invention, and the present invention is not limited to the following examples.

### Examples

### Example 1

For a first component, sodium silicate (with a weight ratio of SiO₂/Na₂O of 3.2) as water glass and a metal oxide Al₂O₃ as an additive were used. Herein, 95 wt% of sodium silicate and 5 wt% of Al₂O₃ were used based on 100 wt% of the first component, and were stirred and dissolved at 80 °C for approximately 1 hour.

Subsequently, for a second component, 5 parts by weight of a polyacrylic resin having a number average molecular weight of 4000 and a solid content of 40 % based on 100 parts by weight of the first component was added thereto, and the mixture was sufficiently stirred until the polyacrylic resin was uniformly dispersed therein.

When the stirring was complete, 100 parts by weight of water as a solvent was added thereto based on 100 parts by weight of the first component to prepare an adhesive coating composition having specific gravity of 1.2 g/l.

Subsequently, the adhesive coating composition was coated on an electrical steel sheet. For the electrical steel sheet, 50PN470 having a thickness of 0.5 mm and not coated on both surfaces, a product made by Posco, was cut to a size of 60 X 300 mm. The adhesive coating composition was coated in an amount of about 10 g/m² per each surface on both surfaces of the electrical steel sheet with a bar coater. The coated adhesive coating composition was dried at 500 °C for 30 seconds to form an about 3 µm-thick adhesive coating layer.

Subsequently, the electrical steel sheet with the adhesive coating layer was processed to have a size of 50 X 50 mm, and was then laminated 40 times. Subsequently, the laminated product was stress relief-annealed (heat-fused) at 750 °C under a pressure of 1.0 MPa for 2 hours to manufacture a bonded electrical steel sheet product having a total thickness of 20 mm.

Table 1 shows a ratio of components of the adhesive coating composition, and Table 2 shows kinds of the water glass, chemical formulae, and weight ratios between the metal oxide and silicate in the water glass.

The coated electrical steel sheets were evaluated regarding anti-corrosive properties and close-contacting properties, and the bonded electrical steel sheet product was evaluated regarding insulation properties and oil resistance. The results are shown in Table 3.

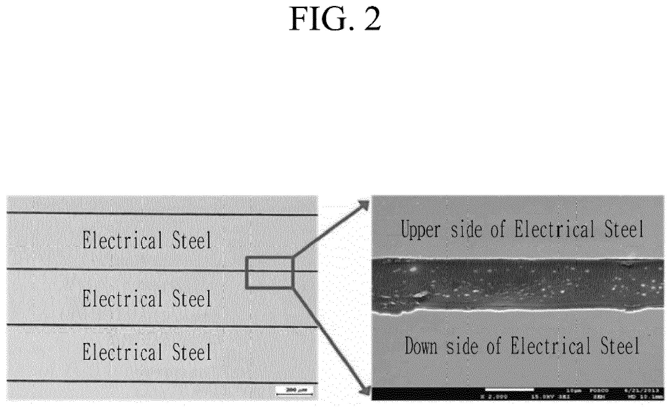

In addition, FIG. 2 shows an optical microscope photograph and a scanning electron microscope photograph of a cross-section of the electrical steel sheet product Example 1.

### Example 2

For the first component, potassium silicate (with a weight ratio of SiO₂/K₂O of 2.5) was used as water glass, and metal hydroxide Zn(OH)₂ was used as an additive. Herein, 95 wt% of potassium silicate and 5 wt% of Zn(OH)₂ were used based on 100 wt% of the first component, and were stirred and dissolved at 80 °C for approximately 1 hour.

When the stirring was complete, 150 parts by weight of water as a solvent was added thereto based on 100 parts by weight of the first component to prepare an adhesive coating composition having specific gravity of 1.2 g/l. The adhesive coating composition was coated on an electrical steel sheet to form a 3 µm-thick adhesive coating layer.

In Example 2, the second component was not added, and preparation of a specimen for coating and heat-fusion and stress-relief annealing were performed as in Example 1.

Table 1 shows an amount ratio of components of an adhesive coating composition, and Table 2 shows kinds of used water glass, chemical formulae, and weight ratios of the metal oxide and silicate in the water glass.

The coated electrical steel sheet was evaluated regarding anti-corrosive properties, close-contacting properties, and insulation properties, and the bonded electrical steel sheet product was evaluated regarding adhesion force and oil resistance. The results are shown in Table 3.

### Example 3

For the first component, lithium silicate (with a weight ratio of SiO₂/Li₂O of 10.2) was used as the water glass, and metal hydroxide Ni(OH)₂ was used as an additive. 95 wt% of lithium silicate and 5 wt% of Ni(OH)₂ were used based on 100 wt% of the first component, and were stirred and dissolved at 80 °C for 1 hour.

For the second component, 5 parts by weight of a polyacrylamide resin having a number average molecular weight of 3000 and a solid content of 35 % was added thereto based on 100 parts by weight of the first component, and the mixture was sufficiently stirred until the polyacrylamide resin was uniformly dispersed therein.

When the stirring was complete, 80 parts by weight of a solvent prepared by using water-ethanol in a ratio of 1:1 for dilution was added thereto based on 100 parts by weight of the first component to prepare an adhesive coating composition having specific gravity of 1.2 g/l. Then, the adhesive coating composition was coated on an electrical steel sheet to form a 5 µm-thick adhesive coating layer.

Herein, preparation of a specimen for coating and heat-fusion and stress-relief annealing were performed as in Example 1.

Table 1 shows an amount ratio of components of the adhesive coating composition, and Table 2 shows kinds of used water glass, chemical formulae, and weight ratios between the metal oxide and silicate in the water glass.

The coated electrical steel sheet was evaluated regarding anti-corrosive properties, close-contacting properties, and insulation properties, and the bonded electrical steel sheet product was evaluated regarding adhesion force and oil resistance. The results are shown in Table 3.

### Example 4

For the first component, a mixture of sodium silicate (with a weight ratio of SiO₂/Na₂O of 3.2) and potassium silicate (with a weight ratio of SiO₂/K₂O of 2.5) in a ratio of 1:1 was used as the water glass. An oxide, PO₄, was used as an additive. 90 wt% of the water glass prepared by mixing the sodium silicate (with a weight ratio of SiO₂/Na₂O of 3.2) and potassium silicate (with a weight ratio of SiO₂/K₂Oof 2.5) in a ratio of 1:1 and 10 wt% of PO₄ were used based on 100 wt% of the first component, and were stirred and dissolved at 80 °C for approximately 1 hour.

When the stirring was complete, 120 parts by weight of water as a solvent was added thereto based on 100 parts by weight of the first component to prepare an adhesive coating composition having specific gravity of 1.2 g/l. Then, the adhesive coating composition was coated on an electrical steel sheet to form a 5 µm-thick adhesive coating layer.

In Example 4, the second component was not added, and preparation of a specimen for coating and heat-fusion and stress-relief annealing were performed as in Example 1.

Table 1 shows an amount ratio of components of the adhesive coating composition, and Table 2 shows kinds of used water glass, chemical formulae, and weight ratios of the metal oxide and silicate in the water glass.

The coated electrical steel sheet was evaluated regarding anti-corrosive properties, close-contacting properties, and insulation properties, and the bonded electrical steel sheet product was evaluated regarding adhesion force and oil resistance. The results are shown in Table 3.

### Example 5

For a first component, water glass including sodium silicate (with a weight ratio of SiO₂/Na₂O of 3.2) and lithium silicate (with a weight ratio of SiO₂/Li₂O of 10.2) in a ratio of 1:1 was used. A metal oxide, B₂O₃, was used as an additive. 95 wt% of the water glass including sodium silicate (with a weight ratio of SiO₂/Na₂O of 3.2) and lithium silicate (with a weight ratio of SiO₂/Li₂Oof 10.2) in a ratio of 1:1 and 5 wt% of B₂O₃ were added thereto based on 100 wt% of the first component, and then stirred and dissolved at 80 °C for approximately 1 hour.

Subsequently, for the second component, 5 parts by weight of a polyglycol resin having a number average molecular weight of 2500 and a solid content of 45 % was used based on 100 parts by weight of the first component, and then the mixture was sufficiently stirred until the resin was uniformly dispersed therein.

When the stirring was complete, 120 parts by weight of a solvent of water-acetic acid in a ratio 3:1 was added thereto based on 100 parts by weight of the first component to prepare an adhesive coating composition having specific gravity of 1.25 g/l. Subsequently, the adhesive coating composition was coated on an electrical steel sheet to form a 7 µm-thick adhesive coating layer.

Herein, preparation of a specimen for coating and heat-fusion and stress-relief annealing were performed as in Example 1.

Table 1 shows an amount ratio of components of the adhesive coating composition, and Table 2 shows kinds of the water glass, chemical formulae, and weight ratios of the metal oxide and silicate in the water glass.

The coated electrical steel sheet was evaluated regarding anti-corrosive properties, close-contacting properties, and insulation properties, and the bonded electrical steel sheet product was evaluated regarding adhesion force and oil resistance. The results are shown in Table 3.

### Example 6

For the first component, water glass was prepared by mixing potassium silicate (with a weight ratio of SiO₂/K₂O of 2.5) and lithium silicate (with a weight ratio of SiO₂/Li₂O of 10.2) in a ratio of 1:1. An oxide, SbO, was used as an additive. 90 wt% of the water glass including the potassium silicate (with a weight ratio of SiO₂/K₂O of 2.5) and lithium silicate (with a weight ratio of SiO₂/Li₂O of 10.2) in a ratio of 1:1 and 10 wt% of SbO were used based on 100 wt% of the first component, and were stirred and dissolved at 80 °C for approximately 1 hour.

When the stirring was complete, 100 parts by weight of water as a solvent was used based on 100 parts by weight of the first component to prepare an adhesive coating composition having specific gravity of 1.2 g/l. Then, the adhesive coating composition was coated on an electrical steel sheet to form a 7 µm- thick adhesive coating layer.

In Example 6, the second component was not added, and preparation of a specimen for coating and heat-fusion and stress-relief annealing were performed as in Example 1.

Table 1 shows amount ratios of components of the adhesive coating composition, and Table 2 shows kinds of the water glass, chemical formulae, and weight ratios of the metal oxide and silicate in the water glass.

The coated electrical steel sheet was evaluated regarding anti-corrosive properties, close-contacting properties, and insulation properties, and the bonded electrical steel sheet product was evaluated regarding adhesion force and oil resistance. The results are shown in Table 3.

### Example 7

For the first component, the water glass was prepared by mixing sodium silicate (with a weight ratio of SiO₂/Na₂O of 3.2), potassium silicate (with a weight ratio of SiO₂/K₂O of 2.5), and lithium silicate (with a weight ratio of SiO₂/Li₂O of 10.2) in a ratio of 1:1:1. A metal hydroxide, Al(OH)₂, was used as an additive. 85 wt% of the water glass including sodium silicate (with a weight ratio of SiO₂/Na₂O of 3.2), potassium silicate (with a weight ratio of SiO₂/K₂O of 2.5), and lithium silicate (with a weight ratio of SiO₂/Li₂O of 10.2) in a ratio of 1:1:1 and 15 wt% of Al(OH)₂ were used based on 100 wt% of the first component, and were stirred and dissolved at 80 °C for approximately 1 hour.

For the second component, 5 parts by weight of an epoxy resin having a number average molecular weight of 3000 and a solid content of 40 % was added based on 100 parts by weight of the first component, and then the mixture was sufficiently stirred until the resin was uniformly dispersed therein.

When the stirring was complete, 120 parts by weight of a solvent of water: acetic acid in a ratio of 2:1 was added thereto based on 100 parts by weight of the first component to prepare an adhesive coating composition having specific gravity of 1.3 g/l. Then, the adhesive coating composition was coated on an electrical steel sheet to form a 7 µm-thick adhesive coating layer.

Herein, preparation of a specimen for coating and heat-fusion and stress-relief annealing were performed as in Example 1.

Table 1 shows an amount ratio of components of the adhesive coating composition, and Table 2 shows kinds of the water glass, chemical formulae, and weight ratios of the metal oxide and silicate in the water glass.

The coated electrical steel sheet was evaluated regarding anti-corrosive properties, close-contacting properties, and insulation properties, and the bonded electrical steel sheet product was evaluated regarding adhesion force and oil resistance. The results are shown in Table 3.

### Comparative Example

A composition for coating an electrical steel sheet including 50 wt% of chromate and 50 wt% of an acrylic resin based on a total amount of 100 wt% of the chromate, and the acrylic resin was coated to be 7 µm thick on an electrical steel sheet and then processed into a size of 50 X 50 mm. Then, 40 sheets of the coated electrical steel sheet were laminated and fixed through clamping. Subsequently, the laminated electrical steel sheets were heat-fused at 750 °C under a pressure of 1.0 MPa for 2 hours.

Regarding the heat-treated sample, the coated electrical steel sheet product was evaluated regarding anti-corrosive properties, close-contacting properties, and insulation properties, and the bonded electrical steel sheet product was evaluated regarding adhesion force and oil resistance like the examples, and the results are shown in Table 3.

### Experimental Examples: Evaluation of Electrical Steel Sheet Product

**Anti-corrosive Properties:** Anti-corrosive properties were evaluated by keeping a specimen in a 5 % NaCl solution at 35 °C for 8 hours to determine whether the specimen was rusted or not. In the experiment, when the rust was less than or equal to 2 %, very excellent was given, when the rust was less than or equal to 5 %, excellent was given, when the rust was less than or equal to 20 %, satisfactory was given, when the rust was less than or equal to 30 %, average was given, and when the rust was greater than or equal to 50 %, insufficient was given.

**Close-Contacting Properties:** Close-contacting properties were evaluated as a minimum circular arc diameter where a passivation film was not peeled off when a specimen was bent up to 180° in contact with 5, 10, 20, and 30 to 100 mm circular arcs respectively, and herein, when the minimum circular arc diameter was less than or equal to 10 mm, very excellent was given, when the minimum circular arc diameter was less than or equal to 20 mm, excellent was given, when the minimum circular arc diameter was less than or equal to 30 mm, average was given, and when the minimum circular arc diameter was greater than or equal to 30 mm, insufficient was given.

**Insulation Properties:** Insulation properties were measured with a Franklin insulation tester, which is used as a single sheet tester (SST) to measure surface insulation resistance of an electrical steel sheet under a predetermined pressure and a predetermined voltage. A current was in a range of 0 to 1.000 amps. Insulation was measured by putting one sheet of a specimen on a plate to contact a whole electrode and applying a pressure of 300 psi (20.4 atm) thereto by using a pressure applying apparatus. When the pressure reached the testing pressure, a sliding resistor was adjusted, and a scale of an ammeter was read under a voltage of 0.5 V. The insulation of ten sheets of specimens in each test solution were measured and averaged, and when the average was less than or equal to 100 mA, very excellent was given, when the average was less than or equal to 300 mA, excellent was given, when the average was less than or equal to 500 mA, average was given, and when the average was greater than or equal to 500 mA, insufficient was given.

**Anti-ATF Properties:** Oil resistance was evaluated by maintaining a heat-fused sample in a high temperature ATF (automatic transmission fluid) oil of 170 °C for greater than or equal to 3 hours and slowly cooling it down, and then measuring a surface state and an adhesion force at room temperature. When the surface state was examined, the oil should not be permeated into an interface among each sheet core, or an adhesive coating layer should not be dissolved by ATF oil. In the present invention, the oil resistance was evaluated by giving very excellent when a sample, after a high temperature ATF test, had an adhesion force of greater than or equal to 1.0 MPa, excellent when the adhesion force was greater than or equal to 0.5 MPa, average when the adhesion force was greater than or equal to 0.3 MPa, and insufficient when the adhesion force was less than or equal to 0.1 MPa.

**Adhesion Force**: An adhesion force was evaluated by laminating and stress relief-annealing samples coated to have a predetermined thickness per each surface to obtain a coalesced sample and mounting the coalesced sample in JIG having a size of 50 X 50 mm to measure a tensile force. When the adhesion force measured at room temperature was greater than or equal to 1.0 MPa, very excellent was given, when the adhesion force was greater than or equal to 0.5 MPa, excellent was given, when the adhesion force was greater than or equal to 0.3 MPa, average was given, and when the adhesion force was less than or equal to 0.1 MPa, insufficient was given.

The measurement results of the examples and comparative examples are shown in Table 2.

**(Table 1)**

| | First component | | Solvent | Second component | Thickness of coating layer (µm) |
|---|---|---|---|---|---|
| | Water glass | Additive | | | |
| Example 1 | 95 | Al₂O₃ 5 | H₂O 100 | Polyacrylic 5 | 3 |
| Example 2 | 95 | Zn(OH)₂ 5 | H₂O 150 | - | 3 |
| Example 3 | 95 | Ni(OH)₂ 5 | H₂O:ethanol = 1:1 80 | Polyacrylamide 5 | 5 |
| Example 4 | 90 | POa 10 | H₂O 120 | - | 5 |
| Example 5 | 95 | B₂O₃ 5 | H₂O : CH₃COOH = 3:1 120 | Polyglycol 5 | 7 |
| Example 6 | 90 | SbO 10 | Water 100 | - | 7 |
| Example 7 | 85 | Al(OH)₂ 15 | H₂O:CH₃CO OH = 2:1 120 | Epoxy 5 | 7 |
| Comparative Example | Chromate 50 | | Water 120 | Acrylic resin 50 | 5 |

Note 1) In Examples 1 to 7, each amount (wt%) of water glass and an additive is shown based on 100 wt% of a first component.
Note 2) Each amount of a solvent and a second component (parts by weight) is shown based on 100 parts by weight of a first component in Examples 1 to 7.
Note 3) When the solvent is a mixture, a ratio of its constituting materials denotes a weight ratio.
Note 4) Each amount of chromate and acrylic resin is shown as wt% based on 100 wt% of the chromate and the acrylic resin in the comparative example. In addition, an amount of a solvent in the comparative example is shown as parts by weight based on 100 parts by weight of the chromate and the acrylic resin.

**(Table 2)**

| | Kind of water glass | Chemical Formula | Weight ratio |
|---|---|---|---|
| Example 1 | Sodium silicate | Na₂O·3.2SiO₂ | SiO₂/Na₂O = 3.2 |
| Example 2 | Potassium silicate | K₂O·2.5SiO₂ | SiO₂/K₂O = 2.5 |
| Example 3 | Lithium silicate | Li₂O·10.2SiO₂ | SiO₂/Li₂O = 10.2 |
| Example 4 | Sodium silicate: Potassium silicate = 1:1 | Na₂O·3.2SiO₂/ K₂O·2.5SiO₂ | SiO₂/Na₂O = 3.2 |
| | | | SiO₂/K₂O = 2.5 |
| Example 5 | Sodium silicate: Lithium silicate = 1:1 | Na₂O·3.2SiO₂/ Li₂O·10.2SiO₂ | SiO₂/Na₂O = 3.2 |
| | | | SiO₂/Li₂O = 10.2 |
| Example 6 | Potassium silicate: Lithium silicate = 1:1 | K₂O·2.5SiO₂/ Li₂O·10.2SiO₂ | SiO₂/K₂O = 2.5 |
| | | | SiO₂/Li₂O = 10.2 |
| Example 7 | Sodium silicate: Potassium silicate: Lithium silicate = 1:1:1 | Na₂O·3.2SiO₂/ K₂O·2.5SiO₂/ Li₂O·10.2SiO₂ | SiO₂/Na₂O = 3.2 |
| | | | SiO₂/K₂O = 2.5 |
| | | | SiO₂/Li₂O = 10.2 |
| Comparative Example | - | - | - |

Note 1) When the water glass is a mixture, a ratio of its constituting materials denotes a weight ratio.

**(Table 3)**

| | Surface characteristic after coating | | | Characteristics after adhesion | |
|---|---|---|---|---|---|
| | Anti-corrosive properties | Close-contacting properties | Insulation properties | Adherence | Anti-ATF properties |
| Example 1 | ⊚ | ○ | ⊚ | ⊚ | ⊚ |
| Example 2 | ⊚ | ○ | ⊚ | ⊚ | ⊚ |
| Example 3 | ⊚ | ○ | ⊚ | ○ | ○ |
| Example 4 | ⊚ | ○ | ⊚ | ⊚ | ⊚ |
| Example 5 | ⊚ | ○ | ⊚ | ⊚ | ⊚ |
| Example 6 | ⊚ | ○ | ⊚ | ○ | ○ |
| Example 7 | ⊚ | ○ | ⊚ | ⊚ | ⊚ |
| Comparative Example | ⊚ | ⊚ | ⊚ | X | X |

Note 1) Property evaluation - Very excellent: ⊚, Excellent: o, Insufficient: X

## Claims

1. An electrical steel sheet adhesive coating composition, comprising
an electrical steel sheet adhesive coating composition including a first component including water glass and an additive, and a solvent,
wherein the water glass is one or a mixture of two or more of sodium silicate represented by Chemical Formula 2, potassium silicate represented by Chemical Formula 3, and lithium silicate represented by Chemical Formula 4,
wherein the water glass includes a material represented by Chemical Formula 1 below,
the additive is one among an oxide and a hydroxide of a material selected from copper, aluminum, calcium, magnesium, chromium, iron, zinc, zirconium, phosphorus, titanium, strontium, boron, antimony, tin, sodium, potassium, lithium, and nickel, or a mixture of two thereof,
80 to 99.9 wt% of the water glass and 0.1 to 20 wt% of the additive are included based on the total amount, 100 wt%, of the first component,
5 to 200 parts by weight of the solvent is included based on the total amount, 100 parts by weight, of the first component, and
a specific gravity of the electrical steel sheet adhesive coating composition is 1.01 to 1.5 g/l,
wherein the adhesive coating composition further includes 1 to 10 parts by weight of a second component based on the total amount, 100 parts by weight, of the first component, wherein the second component is a water-soluble resin, and the water-soluble resin is one or a mixture of two or more of epoxy-based, acryl-based, phenol-based, acryl-modified epoxy-based, siloxane polymer-based, styrene-based, polyol-based, vinyl-based, ethylene-based, and urethane-based resins:
[Chemical Formula 1] MₓO·n₁SiO₂·m₁H₂O
wherein, in Chemical Formula 1, M is a metal element selected from Na, K, and Li,
x is an integer satisfying 0.1 ≤ x ≤ 5,
n₁ is an integer satisfying 0.1 ≤ n₁ ≤ 15, and
m₁ is an integer satisfying 1 ≤ m₁ ≤ 50,
[Chemical Formula 2] Na₂O·₂SiO₂·m₂H₂O
[Chemical Formula 3] K₂O·n₃SiO₂·m₃H₂O
[Chemical Formula 4] Li₂O·n₄SiO₂·m₄H₂O
wherein, in Chemical Formula 2, n₂ is an integer satisfying 0.1 ≤ n₂ ≤ 5 and m₂ is an integer satisfying 1 ≤ m₂ ≤ 50,
in Chemical Formula 3, n₃ is an integer satisfying 0.1 ≤ n₃ ≤ 15 and m₃ is an integer satisfying 1 ≤ m₃ ≤ 50, and
in Chemical Formula 4, n₄ is an integer satisfying 0.1 ≤ n₄ ≤ 50 and m₄ is an integer satisfying 1 ≤ m₄ ≤ 50,
wherein a weight ratio of silicate (SiO₂) relative to sodium oxide (Na₂O) in the sodium silicate is 1.5 to 4.0,
wherein a weight ratio of silicate (SiO₂) relative to potassium oxide (K₂O) in the potassium silicate is 1.5 to 3.0,
wherein a weight ratio of silicate (SiO₂) relative to lithium oxide (Li₂O) in the lithium silicate is 5.0 to 15.0.

2. The electrical steel sheet adhesive coating composition of claim 1, wherein the water-soluble resin has a glass transition temperature (T_{g}) of 30 to 200 °C.

3. The electrical steel sheet adhesive coating composition of claim 1, wherein the water-soluble resin has a number average molecular weight (Mₙ) of 1000 to 10,000.

4. The electrical steel sheet adhesive coating composition of claim 1, wherein the water-soluble resin has a weight average molecular weight (M_{g}) of 1000 to 50,000.

5. An electrical steel sheet with an adhesive coating layer, comprising:
an electrical steel sheet; and
an adhesive coating layer disposed on one surface or both surface of the electrical steel sheet,
wherein the adhesive coating layer includes a first component including water glass and an additive,
the water glass includes a material represented by Chemical Formula 1 below,
wherein the water glass is one or a mixture of two or more of sodium silicate represented by Chemical Formula 2, potassium silicate represented by Chemical Formula 3, and lithium silicate represented by Chemical Formula 4,
the additive is one among an oxide and a hydroxide of a material selected from copper, aluminum, calcium, magnesium, chromium, iron, zinc, zirconium, phosphorus, titanium, strontium, boron, antimony, tin, sodium, potassium, lithium, and nickel, or a mixture of two thereof,
80 to 99.9 wt% of the water glass and 0.1 to 20 wt% of the additive are included based on the total amount, 100 wt%, of the first component, and 0.1 to 20 wt% of the additive is included,
wherein the adhesive coating composition further includes 1 to 10 parts by weight of a second component based on the total amount, 100 parts by weight, of the first component, wherein the second component is a water-soluble resin, and the water-soluble resin is one or a mixture of two or more of epoxy-based, acryl-based, phenol-based, acryl-modified epoxy-based, siloxane polymer-based, styrene-based, polyol-based, vinyl-based, ethylene-based, and urethane-based resins:
[Chemical Formula 1] MₓO·n₁SiO₂·m₁H₂O
wherein, in Chemical Formula 1, M is a metal element selected from Na, K, and Li,
x is an integer satisfying 0.1 ≤ x ≤ 5,
n₁ is an integer satisfying 0.1 ≤ n₁ ≤ 15, and
m₁ is an integer satisfying 1 ≤ m₁ ≤ 50,
[Chemical Formula 2] Na₂O·₂SiO₂·m₂H₂O
[Chemical Formula 3] K₂O·n₃SiO₂·m₃H₂O
[Chemical Formula 4] Li₂O·n₄SiO₂·m₄H₂O
wherein, in Chemical Formula 2, n₂ is an integer satisfying 0.1 ≤ n₂ ≤ 5 and m₂ is an integer satisfying 1 ≤ m₂ ≤ 50,
in Chemical Formula 3, n₃ is an integer satisfying 0.1 ≤ n₃ ≤ 15 and m₃ is an integer satisfying 1 ≤ m₃ ≤ 50, and
in Chemical Formula 4, n₄ is an integer satisfying 0.1 ≤ n₄ ≤ 50 and m₄ is an integer satisfying 1 ≤ m₄ ≤ 50,
wherein a weight ratio of silicate (SiO₂) relative to sodium oxide (Na₂O) in the sodium silicate is 1.5 to 4.0,
wherein a weight ratio of silicate (SiO₂) relative to potassium oxide (K₂O) in the potassium silicate is 1.5 to 3.0,
wherein a weight ratio of silicate (SiO₂) relative to lithium oxide (Li₂O) in the lithium silicate is 5.0 to 15.0,

6. The electrical steel sheet with an adhesive coating layer of claim 5, wherein the adhesive coating layer has a thickness of 0.1 to 20 µm.

7. An electrical steel sheet product comprising:
a plurality of electrical steel sheets; and
an adhesive coating layer disposed between the plurality of electrical steel sheets,
wherein the adhesive coating layer includes a first component including water glass and an additive,
the water glass includes a material represented by Chemical Formula 1 below,
wherein the water glass is one or a mixture of two or more of sodium silicate represented by Chemical Formula 2, potassium silicate represented by Chemical Formula 3, and lithium silicate represented by Chemical Formula 4,
the additive is one among an oxide and a hydroxide of a material selected from copper, aluminum, calcium, magnesium, chromium, iron, zinc, zirconium, phosphorus, titanium, strontium, boron, antimony, tin, sodium, potassium, lithium, and nickel, or a mixture of two thereof,
80 to 99.9 wt% of the water glass and 0.1 to 20 wt% of the additive are included based on the total amount, 100 wt%, of the first component, and 0.1 to 20 wt% of the additive is included,
wherein the adhesive coating composition further includes 1 to 10 parts by weight of a second component based on the total amount, 100 parts by weight, of the first component, wherein the second component is a water-soluble resin, and the water-soluble resin is one or a mixture of two or more of epoxy-based, acryl-based, phenol-based, acryl-modified epoxy-based, siloxane polymer-based, styrene-based, polyol-based, vinyl-based, ethylene-based, and urethane-based resins:
[Chemical Formula 1] MₓO·n₁SiO₂·m₁H₂O
wherein, in Chemical Formula 1, M is a metal element selected from Na, K, and Li,
x is an integer satisfying 0.1 ≤ x ≤ 5,
n₁ is an integer satisfying 0.1 ≤ n₁ ≤ 15, and
m₁ is an integer satisfying 1 ≤ m₁ ≤ 50,
[Chemical Formula 2] Na₂O·₂SiO₂·m₂H₂O
[Chemical Formula 3] K₂O·n₃SiO₂·m₃H₂O
[Chemical Formula 4] Li₂O·n₄SiO₂·m₄H₂O
wherein, in Chemical Formula 2, n₂ is an integer satisfying 0.1 ≤ n₂ ≤ 5 and m₂ is an integer satisfying 1 ≤ m₂ ≤ 50,
in Chemical Formula 3, n₃ is an integer satisfying 0.1 ≤ n₃ ≤ 15 and m₃ is an integer satisfying 1 ≤ m₃ ≤ 50, and
in Chemical Formula 4, n₄ is an integer satisfying 0.1 ≤ n₄ ≤ 50 and m₄ is an integer satisfying 1 ≤ m₄ ≤ 50,
wherein a weight ratio of silicate (SiO₂) relative to sodium oxide (Na₂O) in the sodium silicate is 1.5 to 4.0,
wherein a weight ratio of silicate (SiO₂) relative to potassium oxide (K₂O) in the potassium silicate is 1.5 to 3.0,
wherein a weight ratio of silicate (SiO₂) relative to lithium oxide (Li₂O) in the lithium silicate is 5.0 to 15.0.

8. The electrical steel sheet product of claim 7, wherein the adhesive coating layer has a thickness of 0.1 to 20 µm.

9. A method of manufacturing an electrical steel sheet product, comprising:
preparing an adhesive coating composition;
coating a plurality of electrical steel sheets with the adhesive coating composition;
laminating the plurality of electrical steel sheets coated with the adhesive coating composition; and
performing stress-relief annealing (SRA) of the laminated plurality of electrical steel sheets to obtain an electrical steel sheet product,
wherein the adhesive coating composition includes a first component including water glass and an additive, and a solvent,
the water glass includes a material represented by Chemical Formula 1 below,
wherein the water glass is one or a mixture of two or more of sodium silicate represented by Chemical Formula 2, potassium silicate represented by Chemical Formula 3, and lithium silicate represented by Chemical Formula 4,
the additive is one among an oxide and a hydroxide of a material selected from copper, aluminum, calcium, magnesium, chromium, iron, zinc, zirconium, phosphorus, titanium, strontium, boron, antimony, tin, sodium, potassium, lithium, and nickel, or a mixture of two thereof,
80 to 99.9 wt% of the water glass and 0.1 to 20 wt% of the additive are included based on the total amount, 100 wt%, of the first component,
5 to 200 parts by weight of the solvent is included based on the total amount, 100 parts by weight, of the first component, and
a specific gravity of the adhesive coating composition is 1.01 to 1.5 g/l,
wherein the adhesive coating composition further includes 1 to 10 parts by weight of a second component based on the total amount, 100 parts by weight, of the first component, wherein the second component is a water-soluble resin, and the water-soluble resin is one or a mixture of two or more of epoxy-based, acryl-based, phenol-based, acryl-modified epoxy-based, siloxane polymer-based, styrene-based, polyol-based, vinyl-based, ethylene-based, and urethane-based resins:
[Chemical Formula 1] MₓO·n₁SiO₂·m₁H₂O
wherein, in Chemical Formula 1, M is a metal element selected from Na, K, and Li,
x is an integer satisfying 0.1 ≤ x ≤ 5,
n₁ is an integer satisfying 0.1 ≤ n₁ ≤ 15, and
m₁ is an integer satisfying 1 ≤ m₁ ≤ 50,
[Chemical Formula 2] Na₂O·₂SiO₂·m₂H₂O
[Chemical Formula 3] K₂O·n₃SiO₂·m₃H₂O
[Chemical Formula 4] Li₂O·n₄SiO₂·m₄H₂O
wherein, in Chemical Formula 2, n₂ is an integer satisfying 0.1 ≤ n₂ ≤ 5 and m₂ is an integer satisfying 1 ≤ m₂ ≤ 50,
in Chemical Formula 3, n₃ is an integer satisfying 0.1 ≤ n₃ ≤ 15 and m₃ is an integer satisfying 1 ≤ m₃ ≤ 50, and
in Chemical Formula 4, n₄ is an integer satisfying 0.1 ≤ n₄ ≤ 50 and m₄ is an integer satisfying 1 ≤ m₄ ≤ 50,
wherein a weight ratio of silicate (SiO₂) relative to sodium oxide (Na₂O) in the sodium silicate is 1.5 to 4.0,
wherein a weight ratio of silicate (SiO₂) relative to potassium oxide (K₂O) in the potassium silicate is 1.5 to 3.0,
wherein a weight ratio of silicate (SiO₂) relative to lithium oxide (Li₂O) in the lithium silicate is 5.0 to 15.0.

## Patentansprüche

1. Haftbeschichtungszusammensetzung für ein Elektrostahlblech, umfassend:
eine Haftbeschichtungszusammensetzung für ein Elektrostahlblech, enthaltend eine erste Komponente, die Wasserglas und einen Zusatzstoff enthält, und ein Lösungsmittel,
wobei das Wasserglas eines oder ein Gemisch aus zwei oder mehreren aus Natriumsilicat, dargestellt durch die chemische Formel 2, Kaliumsilicat, dargestellt durch die chemische Formel 3, und Lithiumsilicat, dargestellt durch die chemische Formel 4, ist,
wobei das Wasserglas ein durch die nachstehende chemische Formel 1 dargestelltes Material enthält,
wobei der Zusatzstoff eines aus einem Oxid und einem Hydroxid eines Materials ist, das aus Kupfer, Aluminium, Calcium, Magnesium, Chrom, Eisen, Zink, Zirkonium, Phosphor, Titan, Strontium, Bor, Antimon, Zinn, Natrium, Kalium, Lithium und Nickel oder einem Gemisch aus zwei davon ausgewählt ist,
wobei 80 bis 99,9 Gew.-% an Wasserglas und 0,1 bis 20 Gew.-% an Zusatzstoff, bezogen auf die Gesamtmenge von 100 Gew.-% der ersten Komponente, enthalten sind,
wobei 5 bis 200 Gewichtsteile des Lösungsmittels, bezogen auf die Gesamtmenge von 100 Gewichtsteilen der ersten Komponente, enthalten sind, und
wobei ein spezifisches Gewicht der Haftbeschichtungszusammensetzung für ein Elektrostahlblech 1,01 bis 1,5 g/l beträgt,
wobei die Haftbeschichtungszusammensetzung ferner 1 bis 10 Gewichtsteile einer zweiten Komponente, bezogen auf die Gesamtmenge von 100 Gewichtsteilen der ersten Komponente, enthält, wobei die zweite Komponente ein wasserlösliches Harz ist und das wasserlösliche Harz eines oder ein Gemisch aus zwei oder mehreren Harzen auf Epoxidbasis, Acrylbasis, Phenolbasis, acrylmodifizierter Epoxidbasis, Siloxanpolymerbasis, Styrolbasis, Polyolbasis, Vinylbasis, Ethylenbasis und Urethanbasis ist:
[Chemische Formel 1] MₓO·n₁SiO₂·m₁H₂O
wobei in der chemischen Formel 1 M ein Metallelement ist,
das aus Na, K und Li ausgewählt ist,
x eine ganze Zahl ist, die die Bedingung 0,1 ≤ x ≤ 5 erfüllt,
n₁ eine ganze Zahl ist, die die Bedingung 0,1 ≤ n₁ ≤ 15 erfüllt, und
m₁ eine ganze Zahl ist, die die Bedingung 1 ≤ m₁ ≤ 50 erfüllt,
[Chemische Formel 2] Na₂O·n₂SiO₂·m₂H₂O
[Chemische Formel 3] K₂O·n₃SiO₂·m₃H₂O
[Chemische Formel 4] Li₂O·n₄SiO₂·m₄H₂O
wobei in der chemischen Formel 2 n₂ eine ganze Zahl ist, die die Bedingung 0,1 ≤ n₂ ≤ 5 erfüllt, und m₂ eine ganze Zahl ist, die die Bedingung 1 ≤ m₂ ≤ 50 erfüllt,
wobei in der chemischen Formel 3 n₃ eine ganze Zahl ist, die die Bedingung 0,1 ≤ n₃ ≤ 15 erfüllt, und m₃ eine ganze Zahl ist, die die Bedingung 1 ≤ m₃ ≤ 50 erfüllt, und
wobei in der chemischen Formel 4 n₄ eine ganze Zahl ist, die die Bedingung 0,1 ≤ n₄ ≤ 50 erfüllt, und m₄ eine ganze Zahl ist, die die Bedingung 1 ≤ m₄ ≤ 50 erfüllt,
wobei ein Gewichtsverhältnis von Silicat (SiO₂) zu Natriumoxid (Na₂O) in dem Natriumsilicat 1,5 bis 4,0 beträgt,
wobei ein Gewichtsverhältnis von Silicat (SiO₂) zu Kaliumoxid (K₂O) in dem Kaliumsilicat 1,5 bis 3,0 beträgt, wobei ein Gewichtsverhältnis von Silicat (SiO₂) zu Lithiumoxid (Li₂O) in dem Lithiumsilicat 5,0 bis 15,0 beträgt.

2. Haftbeschichtungszusammensetzung für ein Elektrostahlblech nach Anspruch 1, wobei das wasserlösliche Harz eine Glasübergangstemperatur (T_{g}) von 30 bis 200 °C aufweist.

3. Haftbeschichtungszusammensetzung für ein Elektrostahlblech nach Anspruch 1, wobei das wasserlösliche Harz ein zahlengemitteltes Molekulargewicht (Mₙ) von 1000 bis 10.000 aufweist.

4. Haftbeschichtungszusammensetzung für ein Elektrostahlblech nach Anspruch 1, wobei das wasserlösliche Harz ein gewichtsgemitteltes Molekulargewicht (M_{g}) von 1000 bis 50.000 aufweist.

5. Elektrostahlblech mit einer Haftbeschichtungsschicht, umfassend:
ein Elektrostahlblech; und
eine Haftbeschichtungsschicht, die auf einer Oberfläche oder beiden Oberflächen des Elektrostahlblechs angeordnet ist,
wobei die Haftbeschichtungsschicht eine erste Komponente enthält, die Wasserglas und einen Zusatzstoff enthält,
wobei das Wasserglas ein durch die nachstehende chemische Formel 1 dargestelltes Material enthält,
wobei das Wasserglas eines oder ein Gemisch aus zwei oder mehreren aus Natriumsilicat, dargestellt durch die chemische Formel 2, Kaliumsilicat, dargestellt durch die chemische Formel 3, und Lithiumsilicat, dargestellt durch die chemische Formel 4, ist,
wobei der Zusatzstoff eines aus einem Oxid und einem Hydroxid eines Materials ist, das aus Kupfer, Aluminium, Calcium, Magnesium, Chrom, Eisen, Zink, Zirkonium, Phosphor, Titan, Strontium, Bor, Antimon, Zinn, Natrium, Kalium, Lithium und Nickel oder einem Gemisch aus zwei davon ausgewählt ist,
wobei 80 bis 99,9 Gew.-% an Wasserglas und 0,1 bis 20 Gew.-% an Zusatzstoff, bezogen auf die Gesamtmenge von 100 Gew.-% der ersten Komponente, enthalten sind und 0,1 bis 20 Gew.-% an Zusatzstoff enthalten sind,
wobei die Haftbeschichtungszusammensetzung ferner 1 bis 10 Gewichtsteile einer zweiten Komponente, bezogen auf die Gesamtmenge von 100 Gewichtsteilen der ersten Komponente, enthält, wobei die zweite Komponente ein wasserlösliches Harz ist und das wasserlösliche Harz eines oder ein Gemisch aus zwei oder mehreren aus Harzen auf Epoxidbasis, Acrylbasis, Phenolbasis, acrylmodifizierter Epoxidbasis, Siloxanpolymerbasis, Styrolbasis, Polyolbasis, Vinylbasis, Ethylenbasis und Urethanbasis ist:
[Chemische Formel 1] MₓO·n₁SiO₂·m₁H₂O
wobei in der chemischen Formel 1 M ein Metallelement ist, das aus Na, K und Li ausgewählt ist,
x eine ganze Zahl ist, die die Bedingung 0,1 ≤ x ≤ 5 erfüllt,
n₁ eine ganze Zahl ist, die die Bedingung 0,1 ≤ n₁ ≤ 15 erfüllt, und
m₁ eine ganze Zahl ist, die die Bedingung 1 ≤ m₁ ≤ 50 erfüllt,
[Chemische Formel 2] Na₂O·n₂SiO₂·m₂H₂O
[Chemische Formel 3] K₂O·n₃SiO₂·m₃H₂O
[Chemische Formel 4] Li₂O·n₄SiO₂·m₄H₂O
wobei in der chemischen Formel 2 n₂ eine ganze Zahl ist, die die Bedingung 0,1 ≤ n₂ ≤ 5 erfüllt, und m₂ eine ganze Zahl ist, die die Bedingung 1 ≤ m₂ ≤ 50 erfüllt,
wobei in der chemischen Formel 3 n₃ eine ganze Zahl ist, die die Bedingung 0,1 ≤ n₃ ≤ 15 erfüllt, und m₃ eine ganze Zahl ist, die die Bedingung 1 ≤ m₃ ≤ 50 erfüllt, und
wobei in der chemischen Formel 4 n₄ eine ganze Zahl ist, die die Bedingung 0,1 ≤ n₄ ≤ 50 erfüllt, und m₄ eine ganze Zahl ist, die die Bedingung 1 ≤ m₄ 50 erfüllt,
wobei ein Gewichtsverhältnis von Silicat (SiO₂) zu Natriumoxid (Na₂O) in dem Natriumsilicat 1,5 bis 4,0 beträgt,
wobei ein Gewichtsverhältnis von Silicat (SiO₂) zu Kaliumoxid (K₂O) in dem Kaliumsilicat 1,5 bis 3,0 beträgt,
wobei ein Gewichtsverhältnis von Silicat (SiO₂) zu Lithiumoxid (Li₂O) in dem Lithiumsilicat 5,0 bis 15,0 beträgt.

6. Elektrostahlblech mit einer Haftbeschichtungsschicht nach Anspruch 5, wobei die Haftbeschichtungsschicht eine Dicke von 0,1 bis 20 µm aufweist.

7. Elektrostahlblechprodukt, umfassend:
eine Vielzahl von Elektrostahlblechen; und
eine Haftbeschichtungsschicht, die zwischen der Vielzahl von Elektrostahlblechen angeordnet ist,
wobei die Haftbeschichtungsschicht eine erste Komponente enthält, die Wasserglas und einen Zusatzstoff enthält,
wobei das Wasserglas ein durch die nachstehende chemische Formel 1 dargestelltes Material enthält,
wobei das Wasserglas eines oder ein Gemisch aus zwei oder mehreren aus Natriumsilicat, dargestellt durch die chemische Formel 2, Kaliumsilicat, dargestellt durch die chemische Formel 3, und Lithiumsilicat, dargestellt durch die chemische Formel 4, ist,
wobei der Zusatzstoff eines aus einem Oxid und einem Hydroxid eines Materials ist, das aus Kupfer, Aluminium, Calcium, Magnesium, Chrom, Eisen, Zink, Zirkonium, Phosphor, Titan, Strontium, Bor, Antimon, Zinn, Natrium, Kalium, Lithium und Nickel oder einem Gemisch aus zwei davon ausgewählt ist,
wobei 80 bis 99,9 Gew.-% an Wasserglas und 0,1 bis 20 Gew.-% an Zusatzstoff, bezogen auf die Gesamtmenge von 100 Gew.-% der ersten Komponente, enthalten sind und 0,1 bis 20 Gew.-% an Zusatzstoff enthalten sind,
wobei die Haftbeschichtungszusammensetzung ferner 1 bis 10 Gewichtsteile einer zweiten Komponente, bezogen auf die Gesamtmenge von 100 Gewichtsteilen der ersten Komponente, enthält, wobei die zweite Komponente ein wasserlösliches Harz ist und das wasserlösliche Harz eines oder ein Gemisch aus zwei oder mehreren Harzen auf Epoxidbasis, Acrylbasis, Phenolbasis, acrylmodifizierter Epoxidbasis, Siloxanpolymerbasis, Styrolbasis, Polyolbasis, Vinylbasis, Ethylenbasis und Urethanbasis ist:
[Chemische Formel 1] M_{X}O·n₁SiO₂·m₁H₂O
wobei in der chemischen Formel 1 M ein Metallelement ist, das aus Na, K und Li ausgewählt ist,
x eine ganze Zahl ist, die die Bedingung 0,1 ≤ x ≤ 5 erfüllt,
n₁ eine ganze Zahl ist, die die Bedingung 0,1 ≤ n₁ ≤ 15 erfüllt, und
m₁ eine ganze Zahl ist, die die Bedingung 1 ≤ m₁ ≤ 50 erfüllt,
[Chemische Formel 2] Na₂O·n₂SiO₂·m₂H₂O
[Chemische Formel 3] K₂O·n₃SiO₂·m₃H₂O
[Chemische Formel 4] Li₂O·n₄SiO₂·m₄H₂O
wobei in der chemischen Formel 2 n₂ eine ganze Zahl ist, die die Bedingung 0,1 ≤ n₂ ≤ 5 erfüllt, und m₂ eine ganze Zahl ist, die die Bedingung 1 ≤ m₂ ≤ 50 erfüllt,
wobei in der chemischen Formel 3 n₃ eine ganze Zahl ist, die die Bedingung 0,1 ≤ n₃ ≤ 15 erfüllt, und m₃ eine ganze Zahl ist, die die Bedingung 1 ≤ m₃ ≤ 50 erfüllt, und
wobei in der chemischen Formel 4 n₄ eine ganze Zahl ist, die die Bedingung 0,1 ≤ n₄ ≤ 50 erfüllt, und m₄ eine ganze Zahl ist, die die Bedingung 1 ≤ m₄ ≤ 50 erfüllt,
wobei ein Gewichtsverhältnis von Silicat (SiO₂) zu Natriumoxid (Na₂O) in dem Natriumsilicat 1,5 bis 4,0 beträgt,
wobei ein Gewichtsverhältnis von Silicat (SiO₂) zu Kaliumoxid (K₂O) in dem Kaliumsilicat 1,5 bis 3,0 beträgt,
wobei ein Gewichtsverhältnis von Silicat (SiO₂) zu Lithiumoxid (Li₂O) in dem Lithiumsilicat 5,0 bis 15,0 beträgt.

8. Elektrostahlblechprodukt nach Anspruch 7, wobei die Haftbeschichtungsschicht eine Dicke von 0,1 bis 20 um aufweist.

9. Verfahren zur Herstellung eines Elektrostahlblechprodukts, umfassend:
Vorbereiten einer Haftbeschichtungszusammensetzung;
Beschichten einer Vielzahl von Elektrostahlblechen mit der Haftbeschichtungszusammensetzung;
Laminieren der Vielzahl von mit der Haftbeschichtungszusammensetzung beschichteten Elektrostahlblechen; und
Durchführen eines Spannungsarmglühens (SAG) der laminierten Vielzahl von Elektrostahlblechen, um ein Elektrostahlblechprodukt zu erhalten,
wobei die Haftbeschichtungszusammensetzung eine erste Komponente, die Wasserglas und einen Zusatzstoff enthält,
und ein Lösungsmittel enthält,
wobei das Wasserglas ein durch die nachstehende chemische Formel 1 dargestelltes Material enthält,
wobei das Wasserglas eines oder ein Gemisch aus zwei oder mehreren aus Natriumsilicat, dargestellt durch die chemische Formel 2, Kaliumsilicat, dargestellt durch die chemische Formel 3, und Lithiumsilicat, dargestellt durch die chemische Formel 4, ist,
wobei der Zusatzstoff eines aus einem Oxid und einem Hydroxid eines Materials ist, das aus Kupfer, Aluminium, Calcium, Magnesium, Chrom, Eisen, Zink, Zirkonium, Phosphor, Titan, Strontium, Bor, Antimon, Zinn, Natrium, Kalium, Lithium und Nickel oder einem Gemisch aus zwei davon ausgewählt ist,
wobei 80 bis 99,9 Gew.-% an Wasserglas und 0,1 bis 20 Gew.-% an Zusatzstoff, bezogen auf die Gesamtmenge von 100 Gew.-% der ersten Komponente, enthalten sind,
wobei 5 bis 200 Gewichtsteile an Lösungsmittel, bezogen auf die Gesamtmenge von 100 Gew.-% der ersten Komponente, enthalten sind, und
wobei ein spezifisches Gewicht der Haftbeschichtungszusammensetzung 1,01 bis 1,5 g/l beträgt,
wobei die Haftbeschichtungszusammensetzung ferner 1 bis 10 Gewichtsteile einer zweiten Komponente, bezogen auf die Gesamtmenge von 100 Gewichtsteilen der ersten Komponente, enthält, wobei die zweite Komponente ein wasserlösliches Harz ist und das wasserlösliche Harz eines oder ein Gemisch aus zwei oder mehreren Harzen auf Epoxidbasis, Acrylbasis, Phenolbasis, acrylmodifizierter Epoxidbasis, Siloxanpolymerbasis, Styrolbasis, Polyolbasis, Vinylbasis, Ethylenbasis und Urethanbasis ist:
[Chemische Formel 1] M_{X}O·n₁SiO₂·m₁H₂O
wobei in der chemischen Formel 1 M ein Metallelement ist, das aus Na, K und Li ausgewählt ist,
x eine ganze Zahl ist, die die Bedingung 0,1 ≤ x ≤ 5 erfüllt,
n₁ eine ganze Zahl ist, die die Bedingung 0,1 ≤ n₁ ≤ 15 erfüllt, und
m₁ eine ganze Zahl ist, die die Bedingung 1 ≤ m₁ ≤ 50 erfüllt,
[Chemische Formel 2] Na₂O·n₂SiO₂·m₂H₂O
[Chemische Formel 3] K₂O·n₃SiO₂·m₃H₂O
[Chemische Formel 4] Li₂O·n₄SiO₂·m₄H₂O
wobei in der chemischen Formel 2 n₂ eine ganze Zahl ist, die die Bedingung 0,1 ≤ n₂ ≤ 5 erfüllt, und m₂ eine ganze Zahl ist, die die Bedingung 1 ≤ m₂ ≤ 50 erfüllt,
wobei in der chemischen Formel 3 n₃ eine ganze Zahl ist, die die Bedingung 0,1 ≤ n₃ ≤ 15 erfüllt, und m₃ eine ganze Zahl ist, die die Bedingung 1 ≤ m₃ ≤ 50 erfüllt, und
wobei in der chemischen Formel 4 n₄ eine ganze Zahl ist, die die Bedingung 0,1 ≤ n₄ ≤ 50 erfüllt, und m₄ eine ganze Zahl ist, die die Bedingung 1 ≤ m₄ ≤ 50 erfüllt,
wobei ein Gewichtsverhältnis von Silicat (SiO₂) zu Natriumoxid (Na₂O) in dem Natriumsilicat 1,5 bis 4,0 beträgt,
wobei ein Gewichtsverhältnis von Silicat (SiO₂) zu Kaliumoxid (K₂O) in dem Kaliumsilicat 1,5 bis 3,0 beträgt,
wobei ein Gewichtsverhältnis von Silicat (SiO₂) zu Lithiumoxid (Li₂O) in dem Lithiumsilicat 5,0 bis 15,0 beträgt.

## Revendications

1. Composition de revêtement adhésif de tôle d'acier magnétique, comprenant
une composition de revêtement adhésif de tôle d'acier magnétique incluant un premier composant incluant du verre soluble et un additif, et un solvant,
dans laquelle le verre soluble est un ou un mélange de deux ou plus parmi du silicate de sodium représenté par la formule chimique 2, du silicate de potassium représenté par la formule chimique 3, et du silicate de lithium représenté par la formule chimique 4,
dans laquelle le verre soluble inclut un matériau représenté par la formule chimique 1 ci-dessous,
l'additif est un parmi un oxyde et un hydroxyde d'un matériau choisi parmi cuivre, aluminium, calcium, magnésium, chrome, fer, zinc, zirconium, phosphore, titane, strontium, bore, antimoine, étain, sodium, potassium, lithium et nickel, ou un mélange de deux de ceux-ci,
80 à 99,9 % en poids du verre soluble et 0,1 à 20 % en poids de l'additif sont inclus par rapport à la quantité totale, 100 % en poids, du premier composant,
5 à 200 parties en poids du solvant sont incluses par rapport à la quantité totale, 100 parties en poids, du premier composant, et
une masse volumique de la composition de revêtement adhésif de tôle d'acier magnétique est de 1,01 à 1,5 g/l,
dans laquelle la composition de revêtement adhésif inclut en outre 1 à 10 parties en poids d'un second composant par rapport à la quantité totale, 100 parties en poids, du premier composant, dans laquelle le second composant est une résine soluble dans l'eau, et la résine soluble dans l'eau est une résine ou un mélange de deux ou plus parmi des résines à base d'époxy, à base d'acryle, à base de phénol, à base d'époxy modifié par acryle, à base de polymère siloxane, à base de styrène, à base de polyol, à base de vinyle, à base d'éthylène et à base d'uréthane :
[Formule chimique 1] MₓO·n₁SiO₂·m₁H₂O
dans laquelle, dans la formule chimique 1, M est un élément métallique choisi parmi Na, K et Li,
x est un nombre entier satisfaisant 0,1 ≤ x ≤ 5,
n₁ est un nombre entier satisfaisant 0,1 ≤ n₁ ≤ 15, et
m₁ est un nombre entier satisfaisant 1 ≤ m₁ ≤ 50,
[Formule chimique 2] Na₂O·n₂SiO₂·m₂H₂O
[Formule chimique 3] K₂O·n₃SiO₂·m₃H₂O
[Formule chimique 4] Li₂O·n₄SiO₂·m₄H₂O
dans laquelle, dans la formule chimique 2, n₂ est un nombre entier satisfaisant 0,1 ≤ n₂ ≤ 5 et m₂ est un nombre entier satisfaisant 1 ≤ m₂ ≤ 50,
dans la formule chimique 3, n₃ est un nombre entier satisfaisant 0,1 ≤ n₃ ≤ 15 et m₃ est un nombre entier satisfaisant 1 ≤ m₃ ≤ 50, et
dans la formule chimique 4, n₄ est un nombre entier satisfaisant 0,1 ≤ n₄ ≤ 50 et m₄ est un nombre entier satisfaisant 1 ≤ m₄ ≤ 50,
dans laquelle un rapport en poids entre silicate (SiO₂) et oxyde de sodium (Na₂O) dans le silicate de sodium est de 1,5 à 4,0,
dans laquelle un rapport en poids entre silicate (SiO₂) et oxyde de potassium (K₂O) dans le silicate de potassium est de 1,5 à 3,0,
dans laquelle un rapport en poids entre silicate (SiO₂) et oxyde de lithium (Li₂O) dans le silicate de lithium est de 5,0 à 15,0.

2. Composition de revêtement adhésif de tôle d'acier magnétique selon la revendication 1, dans laquelle la résine soluble dans l'eau a une température de transition vitreuse (T_{g}) de 30 à 200 °C.

3. Composition de revêtement adhésif de tôle d'acier magnétique selon la revendication 1, dans laquelle la résine soluble dans l'eau a un poids moléculaire moyen en nombre (Mₙ) de 1000 à 10 000.

4. Composition de revêtement adhésif de tôle d'acier magnétique selon la revendication 1, dans laquelle la résine soluble dans l'eau a un poids moléculaire moyen en poids (M_{g}) de 1000 à 50 000.

5. Tôle d'acier magnétique dotée d'une couche de revêtement adhésif, comprenant :
une tôle d'acier magnétique ; et
une couche de revêtement adhésif disposée sur une surface ou les deux surfaces de la tôle d'acier magnétique,
dans laquelle la couche de revêtement adhésif inclut un premier composant incluant du verre soluble et un additif, le verre soluble inclut un matériau représenté par la formule chimique 1 ci-dessous,
dans laquelle le verre soluble est un ou un mélange de deux ou plus parmi du silicate de sodium représenté par la formule chimique 2, du silicate de potassium représenté par la formule chimique 3, et du silicate de lithium représenté par la formule chimique 4,
l'additif est un parmi un oxyde et un hydroxyde d'un matériau choisi parmi cuivre, aluminium, calcium, magnésium, chrome, fer, zinc, zirconium, phosphore, titane, strontium, bore, antimoine, étain, sodium, potassium, lithium et nickel, ou un mélange de deux de ceux-ci,
80 à 99,9 % en poids du verre soluble et 0,1 à 20 % en poids de l'additif sont inclus par rapport à la quantité totale, 100 % en poids, du premier composant, et 0,1 à 20 % en poids de l'additif sont inclus,
dans laquelle la composition de revêtement adhésif inclut en outre 1 à 10 parties en poids d'un second composant par rapport à la quantité totale, 100 parties en poids, du premier composant, dans laquelle le second composant est une résine soluble dans l'eau, et la résine soluble dans l'eau est une résine ou un mélange de deux ou plus parmi des résines à base d'époxy, à base d'acryle, à base de phénol, à base d'époxy modifié par acryle, à base de polymère siloxane, à base de styrène, à base de polyol, à base de vinyle, à base d'éthylène et à base d'uréthane :
[Formule chimique 1] MₓO·n₁SiO₂·mᵢH₂O
dans laquelle, dans la formule chimique 1, M est un élément métallique choisi parmi Na, K et Li,
x est un nombre entier satisfaisant 0,1 ≤ x ≤ 5,
n₁ est un nombre entier satisfaisant 0,1 ≤ n₁ ≤ 15, et
m₁ est un nombre entier satisfaisant 1 ≤ m₁ ≤ 50,
[Formule chimique 2] Na₂O·n₂SiO₂·m₂H₂O
[Formule chimique 3] K₂O·n₃SiO₂·m₃H₂O
[Formule chimique 4] Li₂O·n₄SiO₂·m₄H₂O
dans laquelle, dans la formule chimique 2, n₂ est un nombre entier satisfaisant 0,1 ≤ n₂ ≤ 5 et m₂ est un nombre entier satisfaisant 1 ≤ m₂ ≤ 50,
dans la formule chimique 3, n₃ est un nombre entier satisfaisant 0,1 ≤ n₃ ≤ 15 et m₃ est un nombre entier satisfaisant 1 ≤ m₃ ≤ 50, et
dans la formule chimique 4, n₄ est un nombre entier satisfaisant 0,1 ≤ n₄ ≤ 50 et m₄ est un nombre entier satisfaisant 1 ≤ m₄ ≤ 50,
dans laquelle un rapport en poids entre silicate (SiO₂) et oxyde de sodium (Na₂O) dans le silicate de sodium est de 1,5 à 4,0,
dans laquelle un rapport en poids entre silicate (SiO₂) et oxyde de potassium (K₂O) dans le silicate de potassium est de 1,5 à 3,0,
dans laquelle un rapport en poids entre silicate (SiO₂) et oxyde de lithium (Li₂O) dans le silicate de lithium est de 5,0 à 15,0.

6. Tôle d'acier magnétique dotée d'une couche de revêtement adhésif selon la revendication 5, dans laquelle la couche de revêtement adhésif a une épaisseur de 0,1 à 20 um.

7. Produit de tôle d'acier magnétique comprenant :
une pluralité de tôles d'acier magnétique ; et
une couche de revêtement adhésif disposée entre la pluralité de tôles d'acier magnétique,
dans lequel la couche de revêtement adhésif inclut un premier composant incluant du verre soluble et un additif,
le verre soluble inclut un matériau représenté par la formule chimique 1 ci-dessous,
dans lequel le verre soluble est un ou un mélange de deux ou plus parmi du silicate de sodium représenté par la formule chimique 2, du silicate de potassium représenté par la formule chimique 3, et du silicate de lithium représenté par la formule chimique 4,
l'additif est un parmi un oxyde et un hydroxyde d'un matériau choisi parmi cuivre, aluminium, calcium, magnésium, chrome, fer, zinc, zirconium, phosphore, titane, strontium, bore, antimoine, étain, sodium, potassium, lithium et nickel, ou un mélange de deux de ceux-ci,
80 à 99,9 % en poids du verre soluble et 0,1 à 20 % en poids de l'additif sont inclus par rapport à la quantité totale, 100 % en poids, du premier composant, et 0,1 à 20 % en poids de l'additif sont inclus,
dans lequel la composition de revêtement adhésif inclut en outre 1 à 10 parties en poids d'un second composant par rapport à la quantité totale, 100 parties en poids, du premier composant, dans lequel le second composant est une résine soluble dans l'eau, et la résine soluble dans l'eau est une résine ou un mélange de deux ou plus parmi des résines à base d'époxy, à base d'acryle, à base de phénol, à base d'époxy modifié par acryle, à base de polymère siloxane, à base de styrène, à base de polyol, à base de vinyle, à base d'éthylène et à base d'uréthane :
[Formule chimique 1] MₓO·n₁SiO₂·m₁H₂O
dans lequel, dans la formule chimique 1, M est un élément métallique choisi parmi Na, K et Li,
x est un nombre entier satisfaisant 0,1 ≤ x ≤ 5,
n₁ est un nombre entier satisfaisant 0,1 ≤ n₁ ≤ 15, et
m₁ est un nombre entier satisfaisant 1 ≤ m₁ ≤ 50,
[Formule chimique 2] Na₂O·n₂SiO₂·m₂H₂O
[Formule chimique 3] K₂O·n₃SiO₂·m₃H₂O
[Formule chimique 4] Li₂O·n₄SiO₂·m₄H₂O
dans lequel, dans la formule chimique 2, n₂ est un nombre entier satisfaisant 0,1 ≤ n₂ ≤ 5 et m₂ est un nombre entier satisfaisant 1 ≤ m₂ ≤ 50,
dans la formule chimique 3, n₃ est un nombre entier satisfaisant 0,1 ≤ n₃ ≤ 15 et m₃ est un nombre entier satisfaisant 1 ≤ m₃ ≤ 50, et
dans la formule chimique 4, n₄ est un nombre entier satisfaisant 0,1 ≤ n₄ ≤ 50 et m₄ est un nombre entier satisfaisant 1 ≤ m₄ ≤ 50,
dans lequel un rapport en poids entre silicate (SiO₂) et oxyde de sodium (Na₂O) dans le silicate de sodium est de 1,5 à 4,0,
dans lequel un rapport en poids entre silicate (SiO₂) et oxyde de potassium (K₂O) dans le silicate de potassium est de 1,5 à 3,0,
dans lequel un rapport en poids entre silicate (SiO₂) et oxyde de lithium (Li₂O) dans le silicate de lithium est de 5,0 à 15,0.

8. Produit de tôle d'acier magnétique selon la revendication 7, dans lequel la couche de revêtement adhésif a une épaisseur de 0,1 à 20 um.

9. Procédé de fabrication d'un produit de tôle d'acier magnétique, comprenant :
la préparation d'une composition de revêtement adhésif ;
le revêtement d'une pluralité de tôles d'acier magnétique avec la composition de revêtement adhésif ;
la stratification de la pluralité de tôles d'acier magnétique revêtues de la composition de revêtement adhésif ; et
la réalisation d'un recuit de stabilisation (SRA) de la pluralité de de tôles d'acier magnétique stratifiées pour obtenir un produit de tôle d'acier magnétique,
dans lequel la composition de revêtement adhésif inclut un premier composant incluant du verre soluble et un additif, et un solvant,
le verre soluble inclut un matériau représenté par la formule chimique 1 ci-dessous,
dans lequel le verre soluble est un ou un mélange de deux ou plus parmi du silicate de sodium représenté par la formule chimique 2, du silicate de potassium représenté par la formule chimique 3, et du silicate de lithium représenté par la formule chimique 4,
l'additif est un parmi un oxyde et un hydroxyde d'un matériau choisi parmi cuivre, aluminium, calcium, magnésium, chrome, fer, zinc, zirconium, phosphore, titane, strontium, bore, antimoine, étain, sodium, potassium, lithium et nickel, ou un mélange de deux de ceux-ci,
80 à 99,9 % en poids du verre soluble et 0,1 à 20 % en poids de l'additif sont inclus par rapport à la quantité totale, 100 % en poids, du premier composant,
5 à 200 parties en poids du solvant sont incluses par rapport à la quantité totale, 100 parties en poids, du premier composant, et
une masse volumique de la composition de revêtement adhésif est de 1,01 à 1,5 g/l,
dans lequel la composition de revêtement adhésif inclut en outre 1 à 10 parties en poids d'un second composant par rapport à la quantité totale, 100 parties en poids, du premier composant, dans lequel le second composant est une résine soluble dans l'eau, et la résine soluble dans l'eau est une résine ou un mélange de deux ou plus parmi des résines à base d'époxy, à base d'acryle, à base de phénol, à base d'époxy modifié par acryle, à base de polymère siloxane, à base de styrène, à base de polyol, à base de vinyle, à base d'éthylène et à base d'uréthane :
[Formule chimique 1] MₓO·n₁SiO₂·m₁H₂O
dans lequel, dans la formule chimique 1, M est un élément métallique choisi parmi Na, K et Li,
x est un nombre entier satisfaisant 0,1 ≤ x ≤ 5,
n₁ est un nombre entier satisfaisant 0,1 ≤ n₁ ≤ 15, et
m₁ est un nombre entier satisfaisant 1 ≤ m₁ ≤ 50,
[Formule chimique 2] Na₂O·n₂SiO₂·m₂H₂O
[Formule chimique 3] K₂O·n₃SiO₂·m₃H₂O
[Formule chimique 4] Li₂O·n₄SiO₂·m₄H₂O
dans lequel, dans la formule chimique 2, n₂ est un nombre entier satisfaisant 0,1 ≤ n₂ ≤ 5 et m₂ est un nombre entier satisfaisant 1 ≤ m₂ ≤ 50,
dans la formule chimique 3, n₃ est un nombre entier satisfaisant 0,1 ≤ n₃ ≤ 15 et m₃ est un nombre entier satisfaisant 1 ≤ m₃ ≤ 50, et
dans la formule chimique 4, n₄ est un nombre entier satisfaisant 0,1 ≤ n₄ ≤ 50 et m₄ est un nombre entier satisfaisant 1 ≤ m₄ ≤ 50,
dans lequel un rapport en poids entre silicate (SiO₂) et oxyde de sodium (Na₂O) dans le silicate de sodium est de 1,5 à 4,0,
dans lequel un rapport en poids entre silicate (SiO₂) et oxyde de potassium (K₂O) dans le silicate de potassium est de 1,5 à 3,0,
dans lequel un rapport en poids entre silicate (SiO₂) et oxyde de lithium (Li₂O) dans le silicate de lithium est de 5,0 à 15,0.
